# EUROPEAN PATENT APPLICATION

(11) **EP 4 694 072 A1**
(43) Date of publication of application: **11.02.2026**
(21) Application number: 24802746.8
(22) Date of filing: 22.04.2024
(51) Int. Cl.: H04L 45/03

(54) **TOPOLOGY INFORMATION UPDATING METHOD AND RELATED APPARATUS**

(30) Priority: 09.05.2023 CN 202310520432
(71) Applicant: Huawei Technologies Co., Ltd., Shenzhen, Guangdong 518129 (CN)
(72) Inventor: LI, Yinghui, Shenzhen, Guangdong 518129 (CN); YANG, Fei, Shenzhen, Guangdong 518129 (CN); SHI, Zhaochen, Shenzhen, Guangdong 518129 (CN); LIU, Bingyang, Shenzhen, Guangdong 518129 (CN); SONG, Xinyi, Shenzhen, Guangdong 518129 (CN); YANG, Yanjun, Shenzhen, Guangdong 518129 (CN); ZHOU, Yujing, Shenzhen, Guangdong 518129 (CN)
(74) Representative: Isarpatent
(86) International application number: PCT/CN2024/089060
(87) International publication number: WO 2024/230461

(57) **Abstract**

This application provides a topology information update method and a related apparatus. The method may be applied to a node having a communication function. The method includes: A first node sends a first packet in a broadcast manner, receives a second packet from a second node, where the second packet is a broadcast packet, and the first packet and the second packet each carry an identity identifier, a topology identifier, and a synchronization radius identifier that are of the respective node. The first node determines, only based on the first packet and the second packet, whether the first node and the second node need to synchronize topology information. In this way, neighboring nodes determines, based on broadcast packets, whether to synchronize topology information, to maintain a neighbor relationship based on the broadcast packets, avoiding a link establishment procedure and reducing power consumption of the nodes. This ensures routing correctness of services while reducing routing flooding overheads.

## Description

This application claims priority to Chinese Patent Application No. 202310520432.4, filed with the China National Intellectual Property Administration on May 9, 2023 and entitled "TOPOLOGY INFORMATION UPDATE METHOD AND RELATED APPARATUS", which is incorporated herein by reference in its entirety.

### TECHNICAL FIELD

This application relates to the field of communication technologies, and in particular, to a topology information update method and a related apparatus.

### BACKGROUND

Optimized link state routing (Optimized Link State Routing, OLSR) is used as an example. The OLSR is a table-driven proactive link-state protocol designed for a mobile ad hoc network (Mobile Ad Hoc Network, MANET).

An OLSR node periodically exchanges topology information with other routers in the network. Different from a conventional link-state protocol, in OLSR, a proposed multipoint relay (Multipoint Relay, MPR) technology restricts diffusion of link state information. This reduces signaling flooding in a density scenario to some extent. Each OLSR node selects two groups of MPRs: flooding MPR and routing MPR, which are used for "flooding reduction (Flooding reduction)" and "topology reduction (Topology reduction)", respectively. Although OLSR offers optimization for network flooding, the way of performing flooding immediately after a topology change still causes a large amount of signaling in a dynamic scenario, does not support link sleep, and has problems like high power consumption.

It can be learned from the foregoing OLSR protocol that, in a current network scenario, when topology information needs to be updated between nodes, packet flooding requires the nodes to wake up and then establish a link, causing high power consumption.

### SUMMARY

Embodiments of this application provide a topology information update method, so that neighboring nodes determine, based on broadcast packets, whether the neighboring nodes need to synchronize topology information, to maintain a neighbor relationship based on the broadcast packets, so as to avoid a link establishment procedure and reduce power consumption of the nodes.

According to a first aspect, an embodiment of this application provides a topology information update method, including:
A first node sends a first packet, where the first packet is a broadcast packet, the first packet includes a first identity identifier, a first topology identifier, and a first synchronization radius identifier, the first identity identifier identifies the first node, the first topology identifier indicates a topology relationship of the first node in a network, and the first synchronization radius identifier indicates a hop count of a node that has same topology information as the first node. The first node receives a second packet, where the second packet is a broadcast packet, the second packet includes a second identity identifier, a second topology identifier, and a second synchronization radius identifier, the second identity identifier identifies a second node, the second topology identifier indicates a topology relationship of the second node in the network, the second synchronization radius identifier indicates a hop count of a node that has same topology information as the second node, and the second node is a neighboring node of the first node. Finally, the first node determines, based on the first packet and the second packet, whether the first node and the second node need to synchronize topology information, where the topology information indicates a topology relationship of the nodes in the network.

In this embodiment of this application, the second node is the neighboring node of the first node. The first node sends the first packet in a broadcast manner. The first node receives the second packet from the second node, where the second packet is the broadcast packet, and the first packet and the second packet each carry an identity identifier, a topology identifier, and a synchronization radius identifier that are of the respective node. The first node determines, only based on the first packet and the second packet, whether the first node and the second node need to synchronize the topology information. In this way, neighboring nodes determines, based on broadcast packets, whether to synchronize topology information, to maintain a neighbor relationship based on the broadcast packets, avoiding a link establishment procedure and reducing power consumption of the nodes. This ensures routing correctness of a service while reducing routing flooding overheads.

With reference to the first aspect, in a possible implementation of the first aspect, after receiving the second packet, the first node extracts the second topology identifier carried in the second packet. Then, the first node detects whether the first topology identifier is consistent with the second topology identifier, and in response to inconsistence between the first topology identifier and the second topology identifier, determines that the first node and the second node synchronize the topology information, or in response to consistence between the first topology identifier and the second topology identifier, determines that the first node and the second node do not need to synchronize the topology information. Whether neighboring nodes need to synchronize topology information is determined by detecting topology identifiers carried in broadcast packets. In this way, synchronization of the topology information between the neighboring nodes can be ensured while a link establishment procedure is avoided, power consumption of the nodes is reduced, and routing correctness of a service is ensured.

With reference to the first aspect, in a possible implementation of the first aspect, the first packet is a layer 2 broadcast packet, and the second packet is a layer 2 broadcast packet. A layer 2 broadcast packet is characterized by no link establishment. Therefore, under low node power consumption, topology identifiers and synchronization radius identifiers can be notified through layer 2 broadcast packets, to ensure that synchronization of the topology information between neighboring nodes can be performed.

With reference to the first aspect, in a possible implementation of the first aspect, the first packet is a Bluetooth low energy advertisement BLE ADV packet, and the second packet is a Bluetooth low energy advertisement BLE ADV packet.

With reference to the first aspect, in a possible implementation of the first aspect, the method further includes: performing hash calculation on topology information of the first node, to obtain the first topology identifier. Hash calculation is performed on topology information with a large byte length to obtain a topology identifier with a small byte length, to further reduce communication overheads of a packet and reduce power consumption of a node.

With reference to the first aspect, in a possible implementation of the first aspect, a length of the first identity identifier is 8 bytes, a length of the first topology identifier is 4 bytes, and a length of the first synchronization radius identifier is 1 byte.

With reference to the first aspect, in a possible implementation of the first aspect, the first node determines, based on the first topology identifier, the first synchronization radius identifier, the second topology identifier, and the second synchronization radius identifier, whether a path between the first node and a target node is reliable, where the path between the target node and the first node passes the second node; and in response to unreliability of the path between the first node and the target node, determines that the first node and the second node synchronize the topology information; or in response to reliability of the path between the first node and the target node, determines that the first node and the second node do not need to synchronize the topology information. Whether neighboring nodes need to synchronize topology information is determined by detecting topology identifiers and synchronization radius identifiers carried in broadcast packets. In this way, synchronization of the topology information between the neighboring nodes can be ensured while a link establishment procedure is avoided, power consumption of the nodes is reduced, and routing correctness of a service is ensured.

With reference to the first aspect, in a possible implementation of the first aspect, the first node obtains a path hop count, where the path hop count is a hop count of a node that a shortest path between the first node and the target node passes; and when the first topology identifier is consistent with the second topology identifier, and a synchronization radius of the second node is greater than or equal to the path hop count minus 2, the first node determines that the path between the first node and the target node is reliable, where the second synchronization radius identifier is obtained based on the synchronization radius of the second node; when the first topology identifier is consistent with the second topology identifier, and a synchronization radius of the second node is less than the path hop count minus 2, the first node determines that the path between the first node and the target node is unreliable; or when the first topology identifier is inconsistent with the second topology identifier, the first node determines that the path between the first node and the target node is unreliable. According to the foregoing method, whether topology information is synchronized between nodes is determined with reference to a hop count from the first node to the target node. In this way, when an actual service occurs, synchronization of topology information between the first node and a destination node of the service can be ensured, to ensure smooth execution of the service.

With reference to the first aspect, in a possible implementation of the first aspect, first, the first node sends topology information of the first node to the second node. Then, the first node receives topology information of the second node. Then, the first node updates the topology information of the first node based on the topology information of the second node, where updated topology information of the first node includes the topology information of the second node. Finally, the first node updates the first topology identifier based on the updated topology information of the first node. Exchanging of topology information between the first node and the second node implements synchronization of the topology information between the nodes. Finally, the first topology identifier carried in the first packet is updated based on the updated topology information, to ensure accuracy of the first packet.

With reference to the first aspect, in a possible implementation of the first aspect, before the first node sends the topology information of the first node to the second node, the method further includes: resetting a synchronization radius of the first node, where a reset synchronization radius of the first node indicates that the hop count of the node that has the same topology information as the first node is 0; and after updating the topology information of the first node based on the topology information of the second node, the method further includes: updating the synchronization radius of the first node, where an updated synchronization radius of the first node indicates that the hop count of the node that has the same topology information as the first node is 1; and updating the first synchronization radius identifier based on the updated synchronization radius of the first node. According to the foregoing method, after the first node updates the topology information, the synchronization radius of the first node is updated in time, to ensure accuracy of the first packet.

With reference to the first aspect, in a possible implementation of the first aspect, first, the first node obtains synchronization radiuses of a plurality of neighboring nodes, where topology information of the plurality of neighboring nodes is the same as the topology information of the first node. Then, the first node updates the synchronization radius of the first node based on the synchronization radiuses of the plurality of neighboring nodes, where an updated synchronization radius of the first node is equal to a smallest synchronization radius in the synchronization radiuses of the plurality of neighboring nodes plus 1. Finally, the first node obtains the first synchronization radius identifier based on the synchronization radius of the first node. When the first node has the plurality of neighboring nodes, and the topology information of the plurality of neighboring nodes is the same as the topology information of the first node, the synchronization radius of the first node may be further updated based on the synchronization radiuses of the plurality of neighboring nodes, to ensure accuracy of the synchronization radius of the first node, and further ensure accuracy of the first packet.

With reference to the first aspect, in a possible implementation of the first aspect, the updating the topology information of the first node based on the topology information of the second node includes: generating, based on the second packet, a neighbor entry related to the second node; and updating the topology information of the first node based on the neighbor entry related to the second node, where updated topology information of the first node includes the neighbor entry related to the second node.

With reference to the first aspect, in a possible implementation of the first aspect, the neighbor entry includes any one or more of the following: a source address, a destination address, type information of a path, a timer of the path, and a priority of the path, where the path is a path between a node corresponding to the source address and a node corresponding to the destination address, and the timer of the path indicates update time of the path. The type information of the path indicates a transmission technology (or a communication protocol) used by the path, for example, BLE, Wi-Fi, RFID, or ZigBee.

With reference to the first aspect, in a possible implementation of the first aspect, the sending a first packet includes: periodically sending the first packet based on an indication of a first periodicity; or in response to that the topology information of the first node is inconsistent with the topology information of the second node, sending the first packet. The first packet is sent periodically, to reduce a frequency for synchronizing topology information of an entire network, so as to avoid a large number of power consumption overheads caused by frequent wake-up of devices.

With reference to the first aspect, in a possible implementation of the first aspect, the determining, based on the first packet and the second packet, whether the first node and the second node need to synchronize topology information includes: periodically determining, based on an indication of a second periodicity and the first packet and the second packet, whether the first node and the second node need to synchronize the topology information. A periodicity for synchronizing topology information is set, to reduce a frequency for synchronizing topology information of an entire network, so as to avoid a large number of power consumption overheads caused by frequent wake-up of devices.

According to a second aspect, an embodiment of this application provides a topology information update method, including: A second node receives a first packet, where the first packet is a broadcast packet, the first packet includes a first identity identifier, a first topology identifier, and a first synchronization radius identifier, the first identity identifier identifies a first node, the first topology identifier indicates a topology relationship of the first node in a network, and the first synchronization radius identifier indicates a hop count of a node that has same topology information as the first node. The second node sends a second packet, where the second packet is a broadcast packet, the second packet includes a second identity identifier, a second topology identifier, and a second synchronization radius identifier, the second identity identifier identifies the second node, the second topology identifier indicates a topology relationship of the second node in the network, the second synchronization radius identifier indicates a hop count of a node that has same topology information as the second node, and the second node is a neighboring node of the first node. Finally, the second node determines, based on the first packet and the second packet, whether the first node and the second node need to synchronize topology information, where the topology information indicates a topology relationship of the nodes in the network.

In this embodiment of this application, the second node is the neighboring node of the first node. The first node sends the first packet in a broadcast manner. The first node receives the second packet from the second node, where the second packet is the broadcast packet. The first packet and the second packet each carry an identity identifier, a topology identifier, and a synchronization radius identifier that are of the respective node. The first node determines, only based on the first packet and the second packet, whether the first node and the second node need to synchronize the topology information. Whether neighboring nodes need to synchronize topology information is determined based on broadcast packets, to maintain a neighbor relationship based on the broadcast packets, so as to avoid a link establishment procedure and reduce power consumption of the nodes. This ensures routing correctness of a service while reducing routing flooding overheads.

With reference to the second aspect, in a possible implementation of the second aspect, after receiving the first packet, the second node extracts the first topology identifier of the first packet. Then, the second node detects whether the first topology identifier is consistent with the second topology identifier, and in response to inconsistence between the first topology identifier and the second topology identifier, determines that the first node and the second node synchronize the topology information, or in response to consistence between the first topology identifier and the second topology identifier, determines that the first node and the second node do not need to synchronize the topology information. Whether neighboring nodes need to synchronize topology information is determined by detecting topology identifiers carried in broadcast packets. In this way, synchronization of the topology information between the neighboring nodes can be ensured while a link establishment procedure is avoided, power consumption of the nodes is reduced, and routing correctness of a service is ensured.

With reference to the second aspect, in a possible implementation of the second aspect, the first packet is a layer 2 broadcast packet, and the second packet is a layer 2 broadcast packet. A layer 2 broadcast packet is characterized by no link establishment. Therefore, under low node power consumption, topology identifiers and synchronization radius identifiers can be notified through layer 2 broadcast packets, to ensure that synchronization of topology information between neighboring nodes can be performed.

With reference to the second aspect, in a possible implementation of the second aspect, the first packet is a Bluetooth low energy advertisement BLE ADV packet, and the second packet is a Bluetooth low energy advertisement BLE ADV packet.

With reference to the second aspect, in a possible implementation of the second aspect, the method further includes: performing hash calculation on topology information of the first node, to obtain the first topology identifier. Hash calculation is performed on topology information with a large byte length to obtain a topology identifier with a small byte length, to further reduce communication overheads of a packet and reduce power consumption of a node.

With reference to the second aspect, in a possible implementation of the second aspect, a length of the first identity identifier is 8 bytes, a length of the first topology identifier is 4 bytes, and a length of the first synchronization radius identifier is 1 byte.

With reference to the second aspect, in a possible implementation of the second aspect, the second node determines, based on the first topology identifier, the first synchronization radius identifier, the second topology identifier, and the second synchronization radius identifier, whether a path between the first node and a target node is reliable, where the path between the target node and the first node passes the second node; and in response to unreliability of the path between the first node and the target node, determines that the first node and the second node synchronize the topology information; or in response to reliability of the path between the first node and the target node, determines that the first node and the second node do not need to synchronize the topology information. Whether neighboring nodes need to synchronize topology information is determined by detecting topology identifiers and synchronization radius identifiers carried in broadcast packets. In this way, synchronization of the topology information between the neighboring nodes can be ensured while a link establishment procedure is avoided, power consumption of the nodes is reduced, and routing correctness of a service is ensured.

With reference to the second aspect, in a possible implementation of the second aspect, the second node sends topology information of the second node to the first node. Then, the second node receives topology information of the first node. Then, the second node updates the topology information of the second node based on the topology information of the first node, where updated topology information of the second node includes the topology information of the first node. Finally, the second node updates the second topology identifier based on the updated topology information of the second node. Exchanging of topology information between the first node and the second node implements synchronization of the topology information between the nodes. Finally, the second topology identifier carried in the second packet is updated based on the updated topology information, to ensure accuracy of the second packet.

With reference to the second aspect, in a possible implementation of the second aspect, the second node resets a synchronization radius of the second node, where a reset synchronization radius of the second node indicates that the hop count of the node that has the same topology information as the second node is 0; and after the updating the topology information of the second node based on the topology information of the first node, the method further includes: updating the synchronization radius of the second node, where an updated synchronization radius of the second node indicates that the hop count of the node that has the same topology information as the second node is 1; and updating the second synchronization radius identifier based on the updated synchronization radius of the second node. According to the foregoing method, after the second node updates the topology information, the synchronization radius of the second node is updated in time, to ensure accuracy of the second packet.

With reference to the second aspect, in a possible implementation of the second aspect, the second node obtains synchronization radiuses of a plurality of neighboring nodes, where topology information of the plurality of neighboring nodes is the same as the topology information of the second node; updates the synchronization radius of the second node based on the synchronization radiuses of the plurality of neighboring nodes, where an updated synchronization radius of the second node is equal to a smallest synchronization radius in the synchronization radiuses of the plurality of neighboring nodes plus 1; and obtains the second synchronization radius identifier based on the synchronization radius of the second node. When the second node has the plurality of neighboring nodes, and the topology information of the plurality of neighboring nodes is the same as the topology information of the second node, the synchronization radius of the second node may be further updated based on the synchronization radiuses of the plurality of neighboring nodes, to ensure accuracy of the synchronization radius of the second node, and further ensure accuracy of the second packet.

With reference to the second aspect, in a possible implementation of the second aspect, the second node generates a neighbor entry related to the first node based on the first packet; and updates the topology information of the second node based on the neighbor entry related to the first node, where updated topology information of the second node includes the neighbor entry related to the first node.

With reference to the second aspect, in a possible implementation of the second aspect, the neighbor entry includes any one or more of the following: a source address, a destination address, type information of a path, a timer of the path, and a priority of the path, where the path is a path between a node corresponding to the source address and a node corresponding to the destination address, and the timer of the path indicates update time of the path. The type information of the path indicates a transmission technology (or a communication protocol) used by the path, for example, BLE, Wi-Fi, RFID, or ZigBee.

With reference to the second aspect, in a possible implementation of the second aspect, that the second node sends a second packet includes: periodically sending the second packet based on an indication of a first periodicity; or in response to that the topology information of the first node is inconsistent with the topology information of the second node, sending the second packet. The second packet is sent periodically, to reduce a frequency for synchronizing topology information of an entire network, so as to avoid a large number of power consumption overheads caused by frequent wake-up of devices.

With reference to the second aspect, in a possible implementation of the second aspect, that the second node determines, based on the first packet and the second packet, whether the first node and the second node need to synchronize topology information includes:
periodically determining, based on an indication of a second periodicity and the first packet and the second packet, whether the first node and the second node need to synchronize the topology information. A periodicity for synchronizing topology information is set, to reduce a frequency for synchronizing topology information of an entire network, so as to avoid a large number of power consumption overheads caused by frequent wake-up of devices.

According to a third aspect, an embodiment of this application provides a communication apparatus, including a transceiver module and a processing module.

The transceiver module is configured to send a first packet, where the first packet is a broadcast packet, the first packet includes a first identity identifier, a first topology identifier, and a first synchronization radius identifier, the first identity identifier identifies a first node, the first topology identifier indicates a topology relationship of the first node in a network, and the first synchronization radius identifier indicates a hop count of a node that has same topology information as the first node.

The transceiver module is further configured to receive a second packet, where the second packet is a broadcast packet, the second packet includes a second identity identifier, a second topology identifier, and a second synchronization radius identifier, the second identity identifier identifies a second node, the second topology identifier indicates a topology relationship of the second node in the network, the second synchronization radius identifier indicates a hop count of a node that has same topology information as the second node, and the second node is a neighboring node of the first node.

The processing module is configured to determine, based on the first packet and the second packet, whether the first node and the second node need to synchronize topology information, where the topology information indicates a topology relationship of the nodes in the network.

In a possible implementation,
the processing module is further configured to detect whether the first topology identifier is consistent with the second topology identifier; and
the processing module is further configured to: in response to inconsistence between the first topology identifier and the second topology identifier, determine that the first node and the second node synchronize the topology information; or
the processing module is further configured to: in response to consistence between the first topology identifier and the second topology identifier, determine that the first node and the second node do not need to synchronize the topology information.

In a possible implementation,
the processing module is further configured to determine, based on the first topology identifier, the first synchronization radius identifier, the second topology identifier, and the second synchronization radius identifier, whether a path between the first node and a target node is reliable, where the path between the target node and the first node passes the second node; and
the processing module is further configured to: in response to unreliability of the path between the first node and the target node, determine that the first node and the second node synchronize the topology information; or
the processing module is further configured to: in response to reliability of the path between the first node and the target node, determine that the first node and the second node do not need to synchronize the topology information.

In a possible implementation,
the processing module is further configured to obtain a path hop count, where the path hop count is a hop count of a node that a shortest path between the first node and the target node passes; and
the processing module is further configured to: when the first topology identifier is consistent with the second topology identifier, and a synchronization radius of the second node is greater than or equal to the path hop count minus 2, determine that the path between the first node and the target node is reliable, where the second synchronization radius identifier is obtained based on the synchronization radius of the second node;
the processing module is further configured to: when the first topology identifier is consistent with the second topology identifier, and a synchronization radius of the second node is less than the path hop count minus 2, determine that the path between the first node and the target node is unreliable; or
the processing module is further configured to: when the first topology identifier is inconsistent with the second topology identifier, determine that the path between the first node and the target node is unreliable.

In a possible implementation,
the transceiver module is further configured to send topology information of the first node to the second node;
the transceiver module is further configured to receive topology information of the second node;
the processing module is further configured to update the topology information of the first node based on the topology information of the second node, where updated topology information of the first node includes the topology information of the second node; and
the processing module is further configured to update the first topology identifier based on the updated topology information of the first node.

In a possible implementation,
the processing module is further configured to reset a synchronization radius of the first node, where a reset synchronization radius of the first node indicates that the hop count of the node that has the same topology information as the first node is 0; and
after the processing module is further configured to update the topology information of the first node based on the topology information of the second node, the method further includes:
   the processing module is further configured to update the synchronization radius of the first node, where an updated synchronization radius of the first node indicates that the hop count of the node that has the same topology information as the first node is 1; and
   the processing module is further configured to update the first synchronization radius identifier based on the updated synchronization radius of the first node.

In a possible implementation,
the transceiver module is further configured to obtain synchronization radiuses of a plurality of neighboring nodes, where topology information of the plurality of neighboring nodes is the same as the topology information of the first node;
the processing module is further configured to update the synchronization radius of the first node based on the synchronization radiuses of the plurality of neighboring nodes, where an updated synchronization radius of the first node is equal to a smallest synchronization radius in the synchronization radiuses of the plurality of neighboring nodes plus 1; and
the processing module is further configured to obtain the first synchronization radius identifier based on the synchronization radius of the first node.

In a possible implementation,
the processing module is further configured to generate, based on the second packet, a neighbor entry related to the second node; and
the processing module is further configured to update the topology information of the first node based on the neighbor entry related to the second node, where updated topology information of the first node includes the neighbor entry related to the second node.

In a possible implementation, the neighbor entry includes any one or more of the following:
a source address, a destination address, type information of a path, a timer of the path, and a priority of the path, where the path is a path between a node corresponding to the source address and a node corresponding to the destination address, and the timer of the path indicates update time of the path.

In a possible implementation,
the transceiver module is further configured to periodically send the first packet based on an indication of a first periodicity; or
the transceiver module is further configured to: in response to that the topology information of the first node is inconsistent with the topology information of the second node, send the first packet.

In a possible implementation,
the processing module is further configured to periodically determine, based on an indication of a second periodicity and the first packet and the second packet, whether the first node and the second node need to synchronize the topology information.

In a possible implementation, the first packet is a layer 2 broadcast packet, and the second packet is a layer 2 broadcast packet.

In a possible implementation, the first packet is a Bluetooth low energy advertisement BLE ADV packet, and the second packet is a Bluetooth low energy advertisement BLE ADV packet.

In a possible implementation,
the processing module is further configured to perform hash calculation on the topology information of the first node, to obtain the first topology identifier.

In a possible implementation, a length of the first identity identifier is 8 bytes, a length of the first topology identifier is 4 bytes, and a length of the first synchronization radius identifier is 1 byte.

According to a fourth aspect, an embodiment of this application provides a communication apparatus. The communication apparatus includes a transceiver module and a processing module, and the communication apparatus includes:
The transceiver module is configured to receive a first packet, where the first packet is a broadcast packet, the first packet includes a first identity identifier, a first topology identifier, and a first synchronization radius identifier, the first identity identifier identifies a first node, the first topology identifier indicates a topology relationship of the first node in a network, and the first synchronization radius identifier indicates a hop count of a node that has same topology information as the first node.

The transceiver module is further configured to send a second packet, where the second packet is a broadcast packet, the second packet includes a second identity identifier, a second topology identifier, and a second synchronization radius identifier, the second identity identifier identifies a second node, the second topology identifier indicates a topology relationship of the second node in the network, the second synchronization radius identifier indicates a hop count of a node that has same topology information as the second node, and the second node is a neighboring node of the first node.

The processing module is configured to determine, based on the first packet and the second packet, whether the first node and the second node need to synchronize topology information, where the topology information indicates a topology relationship of the nodes in the network.

In a possible implementation,
the processing module is further configured to detect whether the first topology identifier is consistent with the second topology identifier; and
the processing module is further configured to: in response to inconsistence between the first topology identifier and the second topology identifier, determine that the first node and the second node synchronize the topology information; or
the processing module is further configured to: in response to consistence between the first topology identifier and the second topology identifier, determine that the first node and the second node do not need to synchronize the topology information.

In a possible implementation,
the processing module is further configured to determine, based on the first topology identifier, the first synchronization radius identifier, the second topology identifier, and the second synchronization radius identifier, whether a path between the first node and a target node is reliable, where the path between the target node and the first node passes the second node; and
the processing module is further configured to: in response to unreliability of the path between the first node and the target node, determine that the first node and the second node synchronize the topology information; or
the processing module is further configured to: in response to reliability of the path between the first node and the target node, determine that the first node and the second node do not need to synchronize the topology information.

In a possible implementation,
the transceiver module is further configured to send topology information of the second node to the first node;
the transceiver module is further configured to receive topology information of the first node;
the processing module is further configured to update the topology information of the second node based on the topology information of the first node, where updated topology information of the second node includes the topology information of the first node; and
the processing module is further configured to update the second topology identifier based on the updated topology information of the second node.

In a possible implementation,
the processing module is further configured to reset a synchronization radius of the second node, where a reset synchronization radius of the second node indicates that the hop count of the node that has the same topology information as the second node is 0; and
after the processing module is further configured to update the topology information of the second node based on the topology information of the first node, the method further includes:
   the processing module is further configured to update the synchronization radius of the second node, where an updated synchronization radius of the second node indicates that the hop count of the node that has the same topology information as the second node is 1; and
   the processing module is further configured to update the second synchronization radius identifier based on the updated synchronization radius of the second node.

In a possible implementation,
the transceiver module is further configured to obtain synchronization radiuses of a plurality of neighboring nodes, where topology information of the plurality of neighboring nodes is the same as the topology information of the second node;
the processing module is further configured to update the synchronization radius of the second node based on the synchronization radiuses of the plurality of neighboring nodes, where an updated synchronization radius of the second node is equal to a smallest synchronization radius in the synchronization radiuses of the plurality of neighboring nodes plus 1; and
the processing module is further configured to obtain the second synchronization radius identifier based on the synchronization radius of the second node.

In a possible implementation,
the processing module is further configured to generate, based on the first packet, a neighbor entry related to the first node; and
the processing module is further configured to update the topology information of the second node based on the neighbor entry related to the first node, where updated topology information of the second node includes the neighbor entry related to the first node.

In a possible implementation, the neighbor entry includes any one or more of the following:
a source address, a destination address, type information of a path, a timer of the path, and a priority of the path, where the path is a path between a node corresponding to the source address and a node corresponding to the destination address, and the timer of the path indicates update time of the path.

In a possible implementation,
the transceiver module is further configured to periodically send the second packet based on an indication of a first periodicity; or
the transceiver module is further configured to: in response to that the topology information of the first node is inconsistent with the topology information of the second node, send the second packet.

In a possible implementation,
the processing module is further configured to periodically determine, based on an indication of a second periodicity and the first packet and the second packet, whether the first node and the second node need to synchronize the topology information.

In a possible implementation, the first packet is a layer 2 broadcast packet, and the second packet is a layer 2 broadcast packet.

In a possible implementation, the first packet is a Bluetooth low energy advertisement BLE ADV packet, and the second packet is a Bluetooth low energy advertisement BLE ADV packet.

In a possible implementation,
the processing module is further configured to perform hash calculation on the topology information of the second node, to obtain the second topology identifier.

In a possible implementation, a length of the first identity identifier is 8 bytes, a length of the first topology identifier is 4 bytes, and a length of the first synchronization radius identifier is 1 byte.

According to a fifth aspect, an embodiment of this application provides a communication apparatus, including a communication interface and a processor.

The communication interface is configured to send a first packet, where the first packet is a broadcast packet, the first packet includes a first identity identifier, a first topology identifier, and a first synchronization radius identifier, the first identity identifier identifies a first node, the first topology identifier indicates a topology relationship of the first node in a network, and the first synchronization radius identifier indicates a hop count of a node that has same topology information as the first node.

The communication interface is further configured to receive a second packet, where the second packet is a broadcast packet, the second packet includes a second identity identifier, a second topology identifier, and a second synchronization radius identifier, the second identity identifier identifies a second node, the second topology identifier indicates a topology relationship of the second node in the network, the second synchronization radius identifier indicates a hop count of a node that has same topology information as the second node, and the second node is a neighboring node of the first node.

The processor is configured to determine, based on the first packet and the second packet, whether the first node and the second node need to synchronize topology information, where the topology information indicates a topology relationship of the nodes in the network.

In a possible implementation,
the processor is further configured to detect whether the first topology identifier is consistent with the second topology identifier; and
the processor is further configured to: in response to inconsistence between the first topology identifier and the second topology identifier, determine that the first node and the second node synchronize the topology information; or
the processor is further configured to: in response to consistence between the first topology identifier and the second topology identifier, determine that the first node and the second node do not need to synchronize the topology information.

In a possible implementation,
the processor is further configured to determine, based on the first topology identifier, the first synchronization radius identifier, the second topology identifier, and the second synchronization radius identifier, whether a path between the first node and a target node is reliable, where the path between the target node and the first node passes the second node; and
the processor is further configured to: in response to unreliability of the path between the first node and the target node, determine that the first node and the second node synchronize the topology information; or
the processor is further configured to: in response to reliability of the path between the first node and the target node, determine that the first node and the second node do not need to synchronize the topology information.

In a possible implementation,
the processor is further configured to obtain a path hop count, where the path hop count is a hop count of a node that a shortest path between the first node and the target node passes; and
the processor is further configured to: when the first topology identifier is consistent with the second topology identifier, and a synchronization radius of the second node is greater than or equal to the path hop count minus 2, determine that the path between the first node and the target node is reliable, where the second synchronization radius identifier is obtained based on the synchronization radius of the second node;
the processor is further configured to: when the first topology identifier is consistent with the second topology identifier, and a synchronization radius of the second node is less than the path hop count minus 2, determine that the path between the first node and the target node is unreliable; or
the processor is further configured to: when the first topology identifier is inconsistent with the second topology identifier, determine that the path between the first node and the target node is unreliable.

In a possible implementation,
the communication interface is further configured to send topology information of the first node to the second node;
the communication interface is further configured to receive topology information of the second node;
the processor is further configured to update the topology information of the first node based on the topology information of the second node, where updated topology information of the first node includes the topology information of the second node; and
the processor is further configured to update the first topology identifier based on the updated topology information of the first node.

In a possible implementation,
the processor is further configured to reset a synchronization radius of the first node, where a reset synchronization radius of the first node indicates that the hop count of the node that has the same topology information as the first node is 0; and
after the processor is further configured to update the topology information of the first node based on the topology information of the second node, the method further includes:
   the processor is further configured to update the synchronization radius of the first node, where an updated synchronization radius of the first node indicates that the hop count of the node that has the same topology information as the first node is 1; and
   the processor is further configured to update the first synchronization radius identifier based on the updated synchronization radius of the first node.

In a possible implementation,
the communication interface is further configured to obtain synchronization radiuses of a plurality of neighboring nodes, where topology information of the plurality of neighboring nodes is the same as the topology information of the first node;
the processor is further configured to update the synchronization radius of the first node based on the synchronization radiuses of the plurality of neighboring nodes, where an updated synchronization radius of the first node is equal to a smallest synchronization radius in the synchronization radiuses of the plurality of neighboring nodes plus 1; and
the processor is further configured to obtain the first synchronization radius identifier based on the synchronization radius of the first node.

In a possible implementation,
the processor is further configured to generate, based on the second packet, a neighbor entry related to the second node; and
the processor is further configured to update the topology information of the first node based on the neighbor entry related to the second node, where updated topology information of the first node includes the neighbor entry related to the second node.

In a possible implementation, the neighbor entry includes any one or more of the following:
a source address, a destination address, type information of a path, a timer of the path, and a priority of the path, where the path is a path between a node corresponding to the source address and a node corresponding to the destination address, and the timer of the path indicates update time of the path.

In a possible implementation,
the communication interface is further configured to periodically send the first packet based on an indication of a first periodicity; or
the communication interface is further configured to: in response to that the topology information of the first node is inconsistent with the topology information of the second node, send the first packet.

In a possible implementation,
the processor is further configured to periodically determine, based on an indication of a second periodicity and the first packet and the second packet, whether the first node and the second node need to synchronize the topology information.

In a possible implementation, the first packet is a layer 2 broadcast packet, and the second packet is a layer 2 broadcast packet.

In a possible implementation, the first packet is a Bluetooth low energy advertisement BLE ADV packet, and the second packet is a Bluetooth low energy advertisement BLE ADV packet.

In a possible implementation,
the processor is further configured to perform hash calculation on the topology information of the first node, to obtain the first topology identifier.

In a possible implementation, a length of the first identity identifier is 8 bytes, a length of the first topology identifier is 4 bytes, and a length of the first synchronization radius identifier is 1 byte.

According to a sixth aspect, an embodiment of this application provides a communication apparatus. The communication apparatus includes a communication interface and a processor, and the communication apparatus includes:

The communication interface is configured to receive a first packet, where the first packet is a broadcast packet, the first packet includes a first identity identifier, a first topology identifier, and a first synchronization radius identifier, the first identity identifier identifies a first node, the first topology identifier indicates a topology relationship of the first node in a network, and the first synchronization radius identifier indicates a hop count of a node that has same topology information as the first node.

The communication interface is further configured to send a second packet, where the second packet is a broadcast packet, the second packet includes a second identity identifier, a second topology identifier, and a second synchronization radius identifier, the second identity identifier identifies a second node, the second topology identifier indicates a topology relationship of the second node in the network, the second synchronization radius identifier indicates a hop count of a node that has same topology information as the second node, and the second node is a neighboring node of the first node.

The processor is configured to determine, based on the first packet and the second packet, whether the first node and the second node need to synchronize topology information, where the topology information indicates a topology relationship of the nodes in the network.

In a possible implementation,
the processor is further configured to detect whether the first topology identifier is consistent with the second topology identifier; and
the processor is further configured to: in response to inconsistence between the first topology identifier and the second topology identifier, determine that the first node and the second node synchronize the topology information; or
the processor is further configured to: in response to consistence between the first topology identifier and the second topology identifier, determine that the first node and the second node do not need to synchronize the topology information.

In a possible implementation,
the processor is further configured to determine, based on the first topology identifier, the first synchronization radius identifier, the second topology identifier, and the second synchronization radius identifier, whether a path between the first node and a target node is reliable, where the path between the target node and the first node passes the second node; and
the processor is further configured to: in response to unreliability of the path between the first node and the target node, determine that the first node and the second node synchronize the topology information; or
the processor is further configured to: in response to reliability of the path between the first node and the target node, determine that the first node and the second node do not need to synchronize the topology information.

In a possible implementation,
the communication interface is further configured to send topology information of the second node to the first node;
the communication interface is further configured to receive topology information of the first node;
the processor is further configured to update the topology information of the second node based on the topology information of the first node, where updated topology information of the second node includes the topology information of the first node; and
the processor is further configured to update the second topology identifier based on the updated topology information of the second node.

In a possible implementation,
the processor is further configured to reset a synchronization radius of the second node, where a reset synchronization radius of the second node indicates that the hop count of the node that has the same topology information as the second node is 0; and
after the processor is further configured to update the topology information of the second node based on the topology information of the first node, the method further includes:
   the processor is further configured to update the synchronization radius of the second node, where an updated synchronization radius of the second node indicates that the hop count of the node that has the same topology information as the second node is 1; and
   the processor is further configured to update the second synchronization radius identifier based on the updated synchronization radius of the second node.

In a possible implementation,
the communication interface is further configured to obtain synchronization radiuses of a plurality of neighboring nodes, where topology information of the plurality of neighboring nodes is the same as the topology information of the second node;
the processor is further configured to update the synchronization radius of the second node based on the synchronization radiuses of the plurality of neighboring nodes, where an updated synchronization radius of the second node is equal to a smallest synchronization radius in the synchronization radiuses of the plurality of neighboring nodes plus 1; and
the processor is further configured to obtain the second synchronization radius identifier based on the synchronization radius of the second node.

In a possible implementation,
the processor is further configured to generate, based on the first packet, a neighbor entry related to the first node; and
the processor is further configured to update the topology information of the second node based on the neighbor entry related to the first node, where updated topology information of the second node includes the neighbor entry related to the first node.

In a possible implementation, the neighbor entry includes any one or more of the following:
a source address, a destination address, type information of a path, a timer of the path, and a priority of the path, where the path is a path between a node corresponding to the source address and a node corresponding to the destination address, and the timer of the path indicates update time of the path.

In a possible implementation,
the communication interface is further configured to periodically send the second packet based on an indication of a first periodicity; or
the communication interface is further configured to: in response to that the topology information of the first node is inconsistent with the topology information of the second node, send the second packet.

In a possible implementation,
the processor is further configured to periodically determine, based on an indication of a second periodicity and the first packet and the second packet, whether the first node and the second node need to synchronize the topology information.

In a possible implementation, the first packet is a layer 2 broadcast packet, and the second packet is a layer 2 broadcast packet.

In a possible implementation, the first packet is a Bluetooth low energy advertisement BLE ADV packet, and the second packet is a Bluetooth low energy advertisement BLE ADV packet.

In a possible implementation,
the processor is further configured to perform hash calculation on the topology information of the second node, to obtain the second topology identifier.

In a possible implementation, a length of the first identity identifier is 8 bytes, a length of the first topology identifier is 4 bytes, and a length of the first synchronization radius identifier is 1 byte.

According to a seventh aspect, an embodiment of this application provides a computer-readable storage medium storing one or more computer-executable instructions. When the computer-executable instructions are executed by a processor, the processor performs any one of the possible implementations of the first aspect.

According to an eighth aspect, an embodiment of this application provides a computer program product (or referred to as a computer program) storing one or more computer-executable instructions. When the computer-executable instructions are executed by a processor, the processor performs any one of the possible implementations of the first aspect.

According to a ninth aspect, this application provides a chip system. The chip system includes a processor, configured to support a computer device in implementing functions in the foregoing aspects. In a possible design, the chip system further includes a memory. The memory is configured to store program instructions and data that are necessary for the computer device. The chip system may include a chip, or may include a chip and another discrete component.

According to a tenth aspect, an embodiment of this application provides a chip system. The chip system includes at least one processor and a communication interface. The communication interface is interconnected to the at least one processor through a line, and the at least one processor is configured to run a computer program or instructions, to perform the method according to the first aspect.

The communication interface in the chip system may be an input/output interface, a pin, a circuit, or the like.

### BRIEF DESCRIPTION OF DRAWINGS

FIG. 1 is a schematic of a scenario of a direct ad hoc network;
FIG. 2 is a diagram of topology flooding;
FIG. 3 is a diagram of maintaining a neighbor relationship;
FIG. 4 is a diagram of a structure of a first packet according to an embodiment of this application;
FIG. 5 is a diagram of an embodiment of a topology information update method according to an embodiment of this application;
FIG. 6 is a diagram of an application scenario in which a first packet is sent according to an embodiment of this application;
FIG. 7 is a diagram of an application scenario in which a second packet is sent according to an embodiment of this application;
FIG. 8 is a diagram of another embodiment of a topology information update method according to an embodiment of this application;
FIG. 9 is a diagram of still another embodiment of a topology information update method according to an embodiment of this application;
FIG. 10 is a diagram of a scenario according to an embodiment of this application;
FIG. 11 is a diagram of yet another embodiment of a topology information update method according to an embodiment of this application;
FIG. 12 is a schematic flowchart of synchronizing topology information according to an embodiment of this application;
FIG. 13 is a diagram of another scenario according to an embodiment of this application;
FIG. 14 is a diagram of an application scenario according to an embodiment of this application;
FIG. 15A and FIG. 15B are a diagram of another application scenario according to an embodiment of this application;
FIG. 16 is a diagram of still another application scenario according to an embodiment of this application;
FIG. 17 is a diagram of a structure of a communication apparatus 1700 according to an embodiment of this application;
FIG. 18 is a diagram of a structure of a communication apparatus 1800 according to an embodiment of this application; and
FIG. 19 is a diagram of a structure of a communication apparatus 1900 according to an embodiment of this application.

### DESCRIPTION OF EMBODIMENTS

The following describes embodiments of this application. It is clearly that described embodiments are merely some but not all of embodiments of this application. A person of ordinary skill in the art may learn that, as a new application scenario emerges, the technical solutions provided in embodiments of this application are also applicable to a similar technical problem.

In the specification, claims, and accompanying drawings of this application, terms "first", "second", and so on are intended to distinguish between similar objects but do not necessarily indicate a specific order or sequence. It should be understood that the descriptions termed in such a manner are interchangeable in proper cases so that embodiments can be implemented in another order than the order illustrated or described in this application. In addition, terms "include" and "have" and any variations thereof are intended to cover non-exclusive inclusions. For example, a process, method, system, product, or device including a series of steps or modules is not necessarily limited to those clearly listed steps or modules, but may include other steps or modules that are not clearly listed or are inherent to such a procedure, method, product, or device. Names or numbers of steps in this application do not mean that the steps in the method procedure need to be performed in a time/logical sequence indicated by the names or numbers. An execution order of the steps in the procedure that have been named or numbered can be changed based on a technical objective to be achieved, provided that same or similar technical effects can be achieved. Unit division in this application is logical division and may be other division during actual application implementation. For example, a plurality of units may be combined or integrated into another system, or some features may be ignored or not performed. In addition, the displayed or discussed mutual couplings or direct couplings or communication connections may be implemented through some interfaces. The indirect couplings or communication connections between the units may be implemented in an electric manner or another similar form. This is not limited in this application. In addition, units or subunits described as separate parts may or may not be physically separate, may or may not be physical units, or may be distributed into a plurality of circuit units. Some or all of the units may be selected based on actual requirements to achieve the objectives of the solutions of this application.

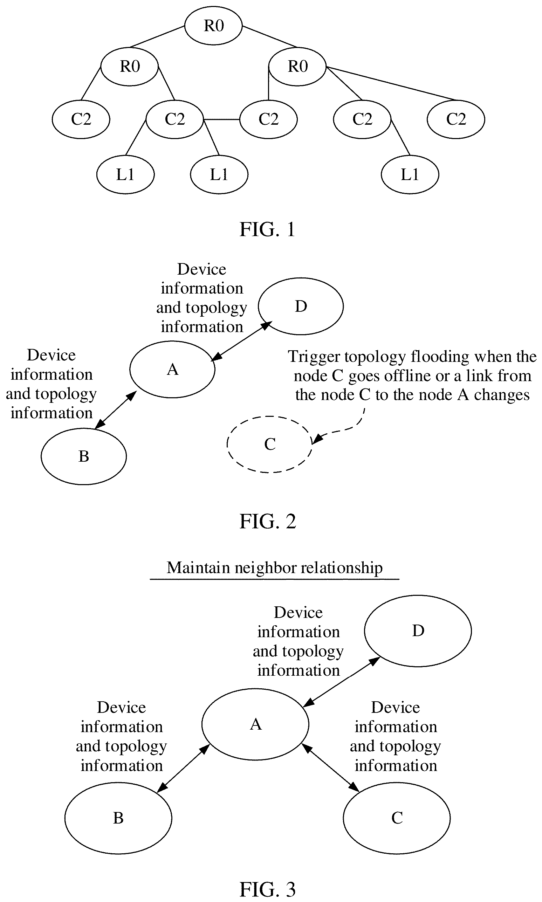

First, for example, refer to FIG. 1. FIG. 1 is a schematic of a scenario of a direct ad hoc network. The scenario includes a plurality of nodes, and the nodes may be interconnected and networked in a plurality of manners, allowing nodes in a same network to be routable. The plurality of nodes include nodes R0, nodes C2, and nodes L1. For example, the node R0 may be a router, the node C2 may be a mobile phone, and the node L1 may be a Bluetooth headset. In embodiments of this application, a node may also be referred to as a communication apparatus, an electronic device, a terminal device, or the like. This is not limited herein. In a multi-hop network scenario, link types of links of all hops may be the same or different. For example, the nodes may be interconnected and networked in any one or more of the following manners: wireless fidelity (wireless fidelity, Wi-Fi), Bluetooth (Bluetooth), Bluetooth low energy (Bluetooth Low Energy, BLE), an ultra-wideband, ZigBee (ZigBee), radio frequency identification (radio frequency identification, RFID), a fourth generation mobile communication technology (4G), a fifth generation mobile communication technology (5G), a sixth generation mobile communication technology (6G), long range radio (Long Range Radio, LoRa), the internet of things (Internet of Things, IoT), a narrowband internet of things (Narrowband Internet of Things, NB-IoT), and the like.

Nodes in embodiments of this application include but are not limited to: a tablet computer (pad) or a foldable mobile phone, a non-foldable mobile phone, a smartwatch, a smart headset, a smart speaker, a smart home appliance terminal, a smart car, a smart street lamp, smart glasses, a smart band, a portable game console, a palmtop computer (personal digital assistant, PDA), a notebook computer, an ultra-mobile personal computer (ultra-mobile personal computer, UMPC), a handheld computer, a netbook, an in-vehicle media playback device, a wearable electronic device (for example, a watch, a band, or glasses), a virtual reality (virtual reality, VR) terminal device, or an augmented reality (augmented reality, AR) terminal device. Alternatively, the node in embodiments of this application may be a switch, a router, a server, or another device or network element that supports packet or data forwarding. In a possible implementation, the node may be a physical entity in a network or an apparatus (for example, a chip or a functional module) in a physical entity. Alternatively, in a possible implementation, the node may be a virtual device (for example, a virtual machine or a container) running in a physical entity. For example, the virtual device may be a virtual router, a virtual switch, or the like.

In the scenario shown in FIG. 1, a method for establishing a link between nodes usually includes periodic packet sending and topology flooding. A periodic packet may be a hello (hello) packet. Neighboring nodes periodically send hello packets to maintain a neighbor relationship. In addition, the neighboring nodes periodically determine whether topology information needs to be synchronized. When a topology relationship of a node changes, topology flooding is performed on an entire network, to synchronize routing information. For example, refer to FIG. 2. FIG. 2 is a diagram of topology flooding. For example, a network scenario includes a node A, a node B, a node C, and a node D. When the node C goes offline, or a link from the node C to the node A changes, it is determined that a topology relationship of the node changes. Therefore, topology flooding is triggered. Specifically, a link is established between the node A and the node B, and then device information exchange and topology information exchange between the node A and the node B are performed. A link is established between the node A and the node D, and then device information exchange and topology information exchange between the node A and the node D are performed. Topology information is synchronized through topology flooding. For another example, refer to FIG. 3. FIG. 3 is a diagram of maintaining a neighbor relationship. A node A, a node B, a node C, and a node D maintain a neighbor relationship by periodically sending hello packets, where the hello packet carries device information and topology information.

The applicant finds through research that the foregoing behaviors all trigger establishment of a link between neighboring nodes, while a process of establishing the link causes high power consumption. When a topology relationship of each node in a network changes, synchronization of topology information between nodes is triggered. In a synchronization process of the topology information, a link needs to be established between the nodes, and frequent link establishment further deteriorates and increases power consumption.

In view of this, an embodiment of this application provides a topology information update method. A second node is a neighboring node of a first node. The first node sends a first packet in a broadcast manner. The first node receives a second packet from the second node, where the second packet is a broadcast packet. The first packet and the second packet each carry an identity identifier, a topology identifier, and a synchronization radius identifier that are of the respective node. The first node determines, only based on the first packet and the second packet, whether the first node and the second node need to synchronize topology information. Whether neighboring nodes need to synchronize topology information is determined based on broadcast packets, to maintain a neighbor relationship based on the broadcast packets, so as to avoid a link establishment procedure and reduce power consumption of the nodes. This ensures routing correctness of a service while reducing routing flooding overheads.

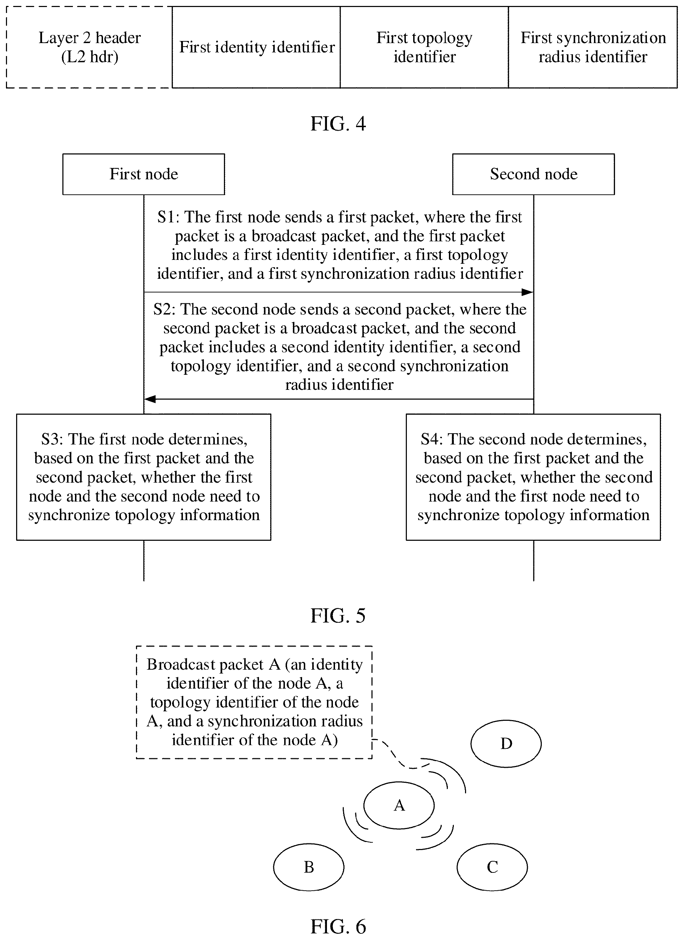

FIG. 5 is a diagram of an embodiment of the topology information update method according to an embodiment of this application. A first node and a second node are used as an example for description, where the second node is any neighboring node of the first node. The topology information update method provided in this embodiment of this application includes the following steps.

S1: The first node sends a first packet, where the first packet is a broadcast packet, and the first packet includes a first identity identifier, a first topology identifier, and a first synchronization radius identifier.

In step S1, to discover a neighboring node, the first node sends a broadcast packet. For ease of differentiation, the broadcast packet sent by the first node is referred to as the first packet. The first packet includes a first identity identifier, a first topology identifier, and a first synchronization radius identifier. The following provides specific descriptions.

The first identity identifier identifies the first node. Specifically, the first identity identifier may be generated based on neighbor keepalive information of the first node. There are a plurality of possible solutions for the neighbor keepalive information. For example, when a communication protocol used by the first node is a border gateway protocol (border gateway protocol, BGP), the neighbor keepalive information may be a keepalive (keepalive) packet or a data update (updata) packet. When a communication protocol used by the first node is a label distribution protocol (label distribution protocol, LDP), the neighbor keepalive information may be a keepalive packet or an updata packet. When a communication protocol used by the first node is an open shortest path first (open shortest path first, OSPF) or an intermediate system-to-intermediate system (intermediate system-to-intermediate system, ISIS) protocol, the neighbor keepalive information may be a hello packet. When a first communication protocol is a resource reservation protocol-traffic engineering (Resource Reservation Protocol-Traffic Engineering, RSVP-TE), the neighbor keepalive information may be an interface state refresh packet. Optionally, the first identity identifier may be an identifier obtained by performing encoding and compression on the neighbor keepalive information. For example, the neighbor keepalive information is a 44-byte hello packet, and an 8-byte first identity identifier is generated by performing encoding and compression on the hello packet.

The first topology identifier is obtained based on topology information of the first node, and the topology information of the first node indicates a topology relationship of the first node in a network. For example, the topology information of the first node is a topology information database of the first node (or a topology information base of the first node for short). The topology information of the first node includes a neighbor entry of a neighboring node of the first node. Optionally, the first topology identifier may be an identifier obtained by performing encoding and compression on the topology information of the first node. For example, the topology information of the first node is topology information with more than 60 bytes, and a 4-byte first topology identifier is obtained through encoding and compression. For another example, the first topology identifier is a hash value obtained by performing hash (hash) calculation on the topology information of the first node. It should be noted that a hash algorithm for hash processing is not limited in embodiments of this application.

The first synchronization radius identifier is generated based on a synchronization radius of the first node. The synchronization radius of the first node indicates a hop count of a node that has same topology information as the first node. At an initial phase after the first node is powered on, the synchronization radius of the first node is null. When the first node detects a neighboring node, the synchronization radius of the first node is updated accordingly. For example, when the first node discovers that a neighboring node is present, an example in which the neighboring node is the second node is used, and the topology information of the first node is consistent with topology information of the second node, the synchronization radius of the first node is updated from 0 to 1. Further, the synchronization radius of the first node needs to be less than or equal to a maximum diameter of the network. For example, if a maximum hop count between any two nodes in the network is n, and n is a positive integer, the synchronization radius of the first node in the network needs to be less than or equal to n.

In an example, the first packet may be a layer 2 (layer 2, L2) packet. For ease of understanding, as shown in FIG. 4, FIG. 4 is a diagram of a structure of a first packet according to an embodiment of this application. The first packet includes a layer 2 header (L2 hdr), a first identity identifier, a first topology identifier, and a first synchronization radius identifier.

In another example, the first packet is a layer 2 broadcast packet.

In still another example, the first packet is a Bluetooth low energy advertisement BLE ADV packet.

Further, optionally, the first node may periodically send the first packet according to a first periodicity. For example, if the first periodicity is 30 seconds, the first node sends the first packet once every 30 seconds. In other words, the first packet serves as a heartbeat packet, and the first node periodically sends the first packet in a broadcast manner.

Further, optionally, the first node may update the first packet in response to a change of the topology information of the first node and/or the synchronization radius of the first node. Specifically, the first topology identifier is updated based on updated topology information of the first node, and the first synchronization radius identifier is updated based on an updated synchronization radius of the first node, so that an updated first packet reflects a change status of the topology information of the first node and/or the synchronization radius of the first node.

In a possible scenario, when the first node is at the initial phase after being powered on, the topology information of the first node is null, and the synchronization radius of the first node is 0. In the first packet sent by the first node, the first topology identifier indicates that the topology information of the first node is null, and the first synchronization radius identifier indicates that the synchronization radius of the first node is 0.

For ease of understanding, the following describes a possible application scenario of step S1. FIG. 6 is a diagram of an application scenario in which the first packet is sent according to this embodiment of this application. A network shown in FIG. 6 includes a node A, a node B, a node C, and a node D. For example, the first node is the node A, and the node A sends a broadcast packet A (namely, the first packet). The broadcast packet A carries an identity identifier of the node A, a topology identifier of the node A, and a synchronization radius identifier of the node A.

S2: The second node sends a second packet, where the second packet is a broadcast packet, and the second packet includes a second identity identifier, a second topology identifier, and a second synchronization radius identifier.

Step S2 is similar to step S1. After the second node is powered on, local topology information of the second node is null, and a synchronization radius of the second node is null. To discover a neighboring node, the second node sends a broadcast packet. For ease of distinguishing, the broadcast packet sent by the second node is referred to as a second packet. The second packet includes a second identity identifier, a second topology identifier, and a second synchronization radius identifier. The following provides specific descriptions.

The second identity identifier identifies the second node. Specifically, the second identity identifier may be generated based on neighbor keepalive information of the second node. There are a plurality of possible solutions for the neighbor keepalive information. For example, when a communication protocol used by the second node is a border gateway protocol (border gateway protocol, BGP), the neighbor keepalive information may be a keepalive (keepalive) packet or a data update (updata) packet. When a communication protocol used by the second node is a label distribution protocol (label distribution protocol, LDP), the neighbor keepalive information may be a keepalive packet or an updata packet. When a communication protocol used by the second node is an open shortest path first (open shortest path first, OSPF) or an intermediate system-to-intermediate system (intermediate system-to-intermediate system, ISIS) protocol, the neighbor keepalive information may be a hello packet. When a second communication protocol is a resource reservation protocol-traffic engineering (Resource Reservation Protocol-Traffic Engineering, RSVP-TE), the neighbor keepalive information may be an interface state refresh packet. Optionally, the second identity identifier may be an identifier obtained by performing encoding and compression on the neighbor keepalive information. For example, the neighbor keepalive information is a 44-byte hello packet, and an 8-byte second identity identifier is generated by performing encoding and compression on the hello packet.

The second topology identifier is obtained based on the topology information of the second node, and the topology information of the second node indicates a topology relationship of the second node in the network. For example, the topology information of the second node is a topology information database of the second node (or a topology information base of the second node for short). The topology information of the second node includes a neighbor entry of a neighboring node of the second node. Optionally, the second topology identifier may be an identifier obtained by performing encoding and compression on the topology information of the second node. For example, the topology information of the second node is topology information with more than 60 bytes, and a 4-byte second topology identifier is obtained through encoding and compression. For another example, the second topology identifier is a hash value obtained by performing hash (hash) calculation on the topology information of the second node. It should be noted that a hash algorithm for hash processing is not limited in embodiments of this application.

The second synchronization radius identifier is generated based on the synchronization radius of the second node. The synchronization radius of the second node indicates a hop count of a node that has same topology information as the second node. At an initial phase after the second node is powered on, the synchronization radius of the second node is null. When the second node detects a neighboring node, the synchronization radius of the second node is updated accordingly. For example, when the second node discovers that a neighboring node is present, an example in which the neighboring node is the second node is used, and the topology information of the second node is consistent with the topology information of the second node, the synchronization radius of the second node is updated from 0 to 1. Further, the synchronization radius of the second node needs to be less than or equal to the maximum diameter of the network. For example, if a maximum hop count between any two nodes in the network is n, and n is a positive integer, the synchronization radius of the second node in the network needs to be less than or equal to n.

In an example, the second packet may be a layer 2 (layer 2, L2) packet. In a possible implementation, a structure of the second packet is similar to the structure of the first packet. For example, the second packet includes a layer 2 header (L2 hdr), a second identity identifier, a second topology identifier, and a second synchronization radius identifier.

In another example, the second packet is a layer 2 broadcast packet.

In still another example, the second packet is a Bluetooth low energy advertisement BLE ADV packet.

Further, optionally, the second node may periodically send the second packet, for example, send the second packet once every 30 seconds. In other words, the second packet serves as a heartbeat packet, and the second node periodically sends the second packet in a broadcast manner.

Further, optionally, the second node may update the second packet in response to a change of the topology information of the second node and/or the synchronization radius of the second node. Specifically, the second topology identifier is updated based on updated topology information of the second node, and the second synchronization radius identifier is updated based on an updated synchronization radius of the second node, so that an updated second packet reflects a change status of the topology information of the second node and/or the synchronization radius of the second node.

In a possible scenario, when the second node is at the initial phase after being powered on, the topology information of the second node is null, and the synchronization radius of the second node is 0. In the second packet sent by the second node, the second topology identifier indicates that the topology information of the second node is null, and the second synchronization radius identifier indicates that the synchronization radius of the second node is 0.

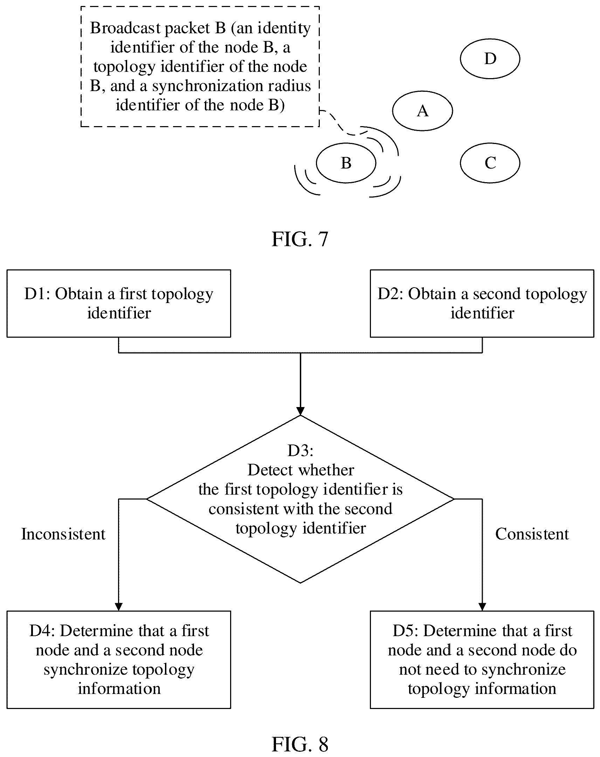

For ease of understanding, the following describes a possible application scenario of step S2. FIG. 7 is a diagram of an application scenario in which the second packet is sent according to this embodiment of this application. A network shown in FIG. 7 includes a node A, a node B, a node C, and a node D. For example, the second node is the node B, and the node B sends a broadcast packet B (namely, the second packet). The broadcast packet B carries an identity identifier of the node B, a topology identifier of the node B, and a synchronization radius identifier of the node B.

It should be noted that a sequence of performing step S1 and step S2 is not limited in embodiments of this application. For example, step S1 may be performed before step S2, or step S2 may be performed before step S1.

S3: The first node determines, based on the first packet and the second packet, whether the first node and the second node need to synchronize topology information.

In step S3, after receiving the second packet, the first node determines, based on the first packet (the topology information of the first node and the synchronization radius of the first node) and the second packet (the topology information of the second node and the synchronization radius of the second node), whether the first node and the second node need to synchronize the topology information.

In a possible implementation, it is determined, based on the first topology identifier and the second topology identifier, whether the first node and the second node need to synchronize the topology information. Specifically, refer to FIG. 8. FIG. 8 is a diagram of another embodiment of the topology information update method according to an embodiment of this application. A method for determining whether the first node and the second node need to synchronize the topology information includes:
D1: Obtain a first topology identifier.

In step D1, the first node obtains the first topology identifier carried in a first packet.

D2: Obtain a second topology identifier.

In step D2, the first node obtains the second topology identifier carried by the second node.

D3: Detect whether the first topology identifier is consistent with the second topology identifier.

In step D3, the first node detects whether the first topology identifier is consistent with the second topology identifier, and step D4 is performed if the first topology identifier is consistent with the second topology identifier, or step D5 is performed if the first topology identifier is inconsistent with the second topology identifier.

D4: Determine that the first node and the second node synchronize the topology information.

In step D4, if the first node determines that the first topology identifier is inconsistent with the second topology identifier, topology information of the first node is inconsistent with topology information of the second node. The first node and the second node need to synchronize the topology information.

Further, there are a plurality of implementations for synchronizing the topology information between the first node and the second node. This is not limited in embodiments of this application. The following provides an example for description: The first node generates, based on a destination address and a source address that are carried in the second packet, a neighbor entry related to the second node. Then, the first node updates the topology information of the first node based on the neighbor entry related to the second node. Specifically, the first node writes the neighbor entry related to the second node into a topology information base of the first node. Topology information base synchronization between the first node and the second node is performed. After the synchronization, the topology information base of the first node is consistent with a topology information base of the second node. In the foregoing manner, the first node and the second node synchronize the topology information.

The neighbor entry includes any one or more of the following: a source address, a destination address, type information of a path, a timer of the path, or a priority of the path. The path is a path from a node corresponding to the source address to a node corresponding to the destination address. The type information of the path indicates a transmission technology (or a communication protocol) used by the path, for example, BLE, Wi-Fi, RFID, or ZigBee. The timer of the path indicates update time of the path. For example, a neighbor entry between a node A and a node B is used as an example for description, and the neighbor entry is shown in Table 1.

**Table 1**

| Source address | Destination address | Type information of a path | Timer of the path | Priority of the path |
|---|---|---|---|---|
| Addr.A | Addr.B | BLE | 600s | 1 |

Further, when the first node determines that the first topology identifier is inconsistent with the second topology identifier, the first node updates a synchronization radius of the first node. Specifically, the first node resets the synchronization radius of the first node to 0. After the first node completes resetting of the synchronization radius of the first node, the first node sends the first packet based on a reset synchronization radius. A first synchronization radius identifier carried in the first packet indicates that the synchronization radius of the first node is 0.

D5: Determine that the first node and the second node do not need to synchronize the topology information.

In step D5, if determining that the first topology identifier is consistent with the second topology identifier, the first node determines that the first node and the second node do not need to synchronize the topology information.

Further, when the first node determines that the first topology identifier is consistent with the second topology identifier, the first node updates the synchronization radius of the first node based on the synchronization radius of the first node and a synchronization radius of the second node (indicated by a second synchronization radius identifier carried in the second packet). Specifically, the first node selects a smaller value from the synchronization radius (before update) of the first node and the synchronization radius of the second node, and then adds 1 to the smaller value, to obtain an updated synchronization radius of the first node.

With reference to step D4 and step D5, it should be noted that after the first node receives a heartbeat packet (the heartbeat packet is, for example, a second packet) from any neighboring node (the neighboring node is, for example, the second node), the first node determines, based on the topology information of the first node and the topology information of the neighboring node, whether and how to update the synchronization radius of the first node. Details are as follows: If the topology information of the first node is the same as topology information of all the neighboring nodes of the first node, the first node obtains synchronization radiuses of all the neighboring nodes. Then, a smallest value is selected from the synchronization radius (before update) of the first node and the synchronization radiuses of all the neighboring nodes. Then, 1 is added to the smallest value, to obtain an updated synchronization radius of the first node. For example, it is assumed that a node a has i neighboring nodes. The i neighboring nodes are denoted as {N₁, N₂, ..., Nᵢ}, where i is a positive integer. A topology identifier of the node a is set to H(a), and a synchronization radius of the node a is set to r(a). If all the neighboring nodes of the node a satisfy H(a) = H(N), that is, the topology identifier of the node a is the same as topology identifiers of all the neighboring nodes of the node a, the synchronization radius of the node a is determined based on synchronization radiuses of all the neighboring nodes of the node a. Specifically, the synchronization radius of the node a is as follows: *r*(*a*) *= min* [*r*(*N*1), *r*(*N*2), *..., r*(*Ni*)] + 1. If topology information of any neighboring node of the first node is inconsistent with the topology information of the first node, the first node resets the synchronization radius of the first node, where a reset synchronization radius of the first node is 0.

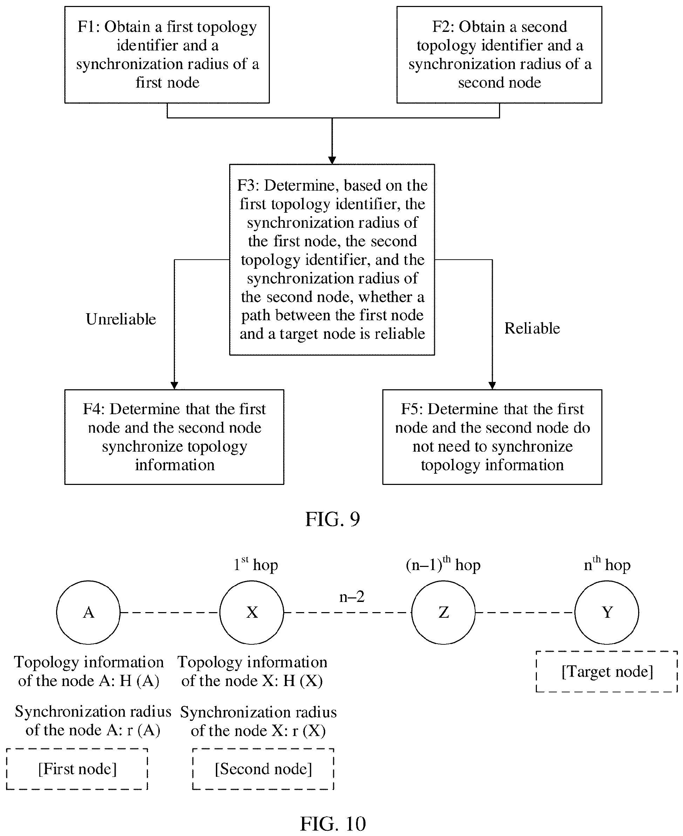

In another possible implementation, it is determined, based on the first topology identifier, the second topology identifier, the synchronization radius (the first synchronization radius identifier) of the first node, and the synchronization radius (the second synchronization radius identifier) of the second node, whether the first node and the second node need to synchronize the topology information. Specifically, refer to FIG. 9. FIG. 9 is a diagram of still another embodiment of the topology information update method according to an embodiment of this application. A method for determining whether the first node and the second node need to synchronize the topology information includes:
F1: Obtain a first topology identifier and a synchronization radius of the first node.

In step F1, the first node obtains the first topology identifier and a first synchronization radius identifier (the synchronization radius of the first node) that are carried in a first packet.

F2: Obtain a second topology identifier and a synchronization radius of the second node.

In step F2, the first node obtains the second topology identifier and a second synchronization radius identifier (the synchronization radius of the second node) that are carried in a second packet.

F3: Determine, based on the first topology identifier, the synchronization radius of the first node, the second topology identifier, and the synchronization radius of the second node, whether a path between the first node and a target node is reliable.

In step F3, after obtaining the first topology identifier, the synchronization radius of the first node, the second topology identifier, and the synchronization radius of the second node, the first node determines, based on the first topology identifier, the synchronization radius of the first node, the second topology identifier, and the synchronization radius of the second node, whether the path between the first node and the target node is reliable. The path between the target node and the first node passes the second node. The target node may be a node with which the first node wants to initiate communication.

For ease of understanding, refer to FIG. 10. FIG. 10 is a diagram of a scenario according to an embodiment of this application. The scenario shown in FIG. 10 includes n nodes, where n is a positive integer. For example, a node A is the first node, the target node is a node Y, a path from the first node (the node A) to the target node (the node Y) has n hops in total, and the path passes a node X (the node X serves as the second node).

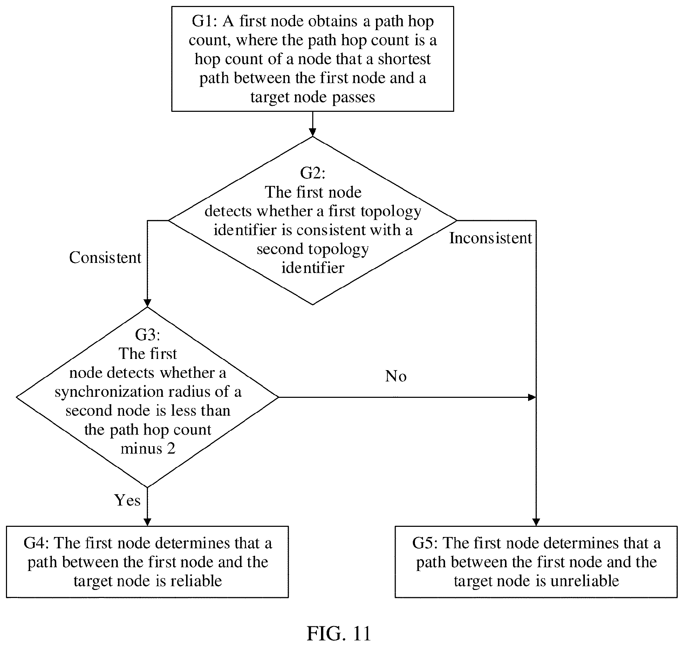

For a possible implementation of a specific method for determining whether the path between the first node and the target node is reliable, refer to FIG. 11. FIG. 11 is a diagram of yet another embodiment of the topology information update method according to an embodiment of this application. A method for determining whether a path between a first node and a target node is reliable includes:
G1: The first node obtains a path hop count, where the path hop count is a hop count of a node that a shortest path between the first node and the target node passes.

In step G1, the first node first obtains the hop count of the node that the shortest path between the first node and the target node passes, where the hop count is referred to as the path hop count. It should be noted that the shortest path passes a second node.

G2: The first node detects whether a first topology identifier is consistent with a second topology identifier.

In step G2, the first node detects whether the first topology identifier is consistent with the second topology identifier, and step G3 is performed if the first topology identifier is consistent with the second topology identifier, or step G4 is performed if the first topology identifier is inconsistent with the second topology identifier.

G3: The first node detects whether a synchronization radius of the second node is less than the path hop count minus 2.

In step G3, the first node detects whether the synchronization radius of the second node is less than the path hop count minus 2, and step G5 is performed if the synchronization radius of the second node is less than the path hop count minus 2, or step G4 is performed if the synchronization radius of the second node is greater than or equal to the path hop count minus 2.

G4: The first node determines that the path between the first node and the target node is reliable.

In step G4, if the first node determines that the path (the path is a shortest path that passes the second node between the first node and the target node) between the first node and the target node is reliable, a link may be directly established between the first node and the target node.

G5: The first node determines that the path between the first node and the target node is unreliable.

In step G5, if the first node determines that the path (the path is the shortest path that passes the second node between the first node and the target node) between the first node and the target node is unreliable, the first node initiates a procedure for synchronizing topology information for an entire network (including the first node, the second node, and the target node).

According to the foregoing method, the first node may determine whether the path between the first node and the target node is reliable, and step F5 is performed if the path is reliable, or step F4 is performed if the path is unreliable.

F4: Determine that the first node and the second node synchronize the topology information.

In step F4, after the first node determines that the first node and the second node need to synchronize the topology information, a procedure for synchronizing topology information is performed, where the procedure is described in detail in subsequent embodiments.

After the first node and the second node complete synchronization of the topology information,

F5: Determine that the first node and the second node do not need to synchronize the topology information.

In step F5, if the first node determines that topology information of the first node is the same as topology information of the second node, the first node determines that the first node and the second node do not need to synchronize the topology information.

Further, if the topology information of the first node is the same as the topology information of the second node, the synchronization radius of the first node is updated. Specifically, the first node obtains synchronization radiuses of a plurality of neighboring nodes, where topology information of the plurality of neighboring nodes is the same as the topology information of the first node. An updated synchronization radius of the first node meets the following condition: For neighboring nodes that have the same topology information as the first node, the updated synchronization radius of the first node is obtained by adding 1 to a smallest value in synchronization radiuses of nodes selected from the neighboring nodes. For example, it is assumed that a node a has i neighboring nodes. The i neighboring nodes are denoted as {N₁, N₂, ..., Nᵢ}, where i is a positive integer. A topology identifier of the node a is set to H(a), and a synchronization radius of the node a is set to r(a). If all the neighboring nodes of the node a satisfy H(a) = H(N), that is, the topology identifier of the node a is the same as topology identifiers of all the neighboring nodes of the node a, the synchronization radius of the node a is determined based on synchronization radiuses of all the neighboring nodes of the node a. Specifically, the synchronization radius of the node a is as follows: *r*(*a*) *= min* [*r*(*N*1), *r*(*N*2)*, ..., r*(*Ni*)] + 1. If topology information of any neighboring node of the first node is inconsistent with the topology information of the first node, the first node resets the synchronization radius of the first node, where a reset synchronization radius of the first node is 0.

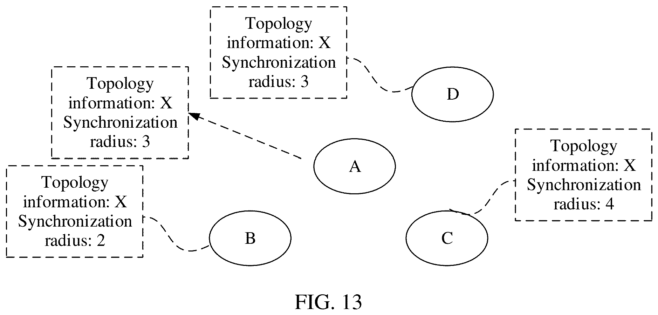

For example, refer to FIG. 13. FIG. 13 is a diagram of another scenario according to an embodiment of this application. A node A is used as an example. Neighboring nodes of the node A include a node B, a node C, and a node D. Topology information of the node B is X, and a synchronization radius of the node B is 3. Topology information of the node C is X, and a synchronization radius of the node C is 4. Topology information of the node D is X, and a synchronization radius of the node D is 2. Because topology information of the node A is consistent with that of the node B, that of the node C, and that of the node D, a synchronization radius of the node A may be obtained through calculation based on the synchronization radius of the node B, the synchronization radius of the node C, and the synchronization radius of the node D. In the foregoing three neighboring nodes, a smallest value in the synchronization radiuses is 2. Therefore, that the synchronization radius of the node A is 2 + 1 = 3 is obtained through calculation.

According to the foregoing method, whether the first node and the second node need to synchronize the topology information may be determined.

S4: The second node determines, based on the first packet and the second packet, whether the second node and the first node need to synchronize topology information.

In step S4, after receiving the first packet, the second node determines, based on the first packet (the topology information of the first node and the synchronization radius of the first node) and the second packet (the topology information of the second node and the synchronization radius of the second node), whether the first node and the second node need to synchronize the topology information.

That the second node determines, based on the first packet and the second packet, whether the second node and the first node need to synchronize the topology information is similar to that the first node determines, based on the first packet and the second packet, whether the first node and the second node need to synchronize topology information in step S3.

In a possible implementation, the second node determines, based on the first topology identifier and the second topology identifier, whether the first node and the second node need to synchronize the topology information. Specifically, a method for determining, by the second node, whether the first node and the second node need to synchronize topology information is similar to the method shown in FIG. 8. Details are not described herein again.

In another possible implementation, the second node determines, based on the first topology identifier, the second topology identifier, the synchronization radius (the first synchronization radius identifier) of the first node, and the synchronization radius (the second synchronization radius identifier) of the second node, whether the first node and the second node need to synchronize the topology information. Specifically, a method for determining, by the second node, whether the first node and the second node need to synchronize topology information is similar to the method shown in FIG. 9. Details are not described herein again.

It should be noted that step S1 and step S2 may be considered as a sending phase of the heartbeat packets (the first packet and the second packet), and step S3 and step S4 may be considered as a synchronization phase of the topology information.

In a possible implementation, step S3 and step S4 are directly performed after step S1 and step S2. In other words, after receiving the second packet from the second node, the first node performs step S3. After receiving the first packet from the first node, the second node performs step S4.

In another possible implementation, an execution periodicity of step S1 and step S2 is a first periodicity. In other words, the first node sends the first packet according to the first periodicity, and the second node sends the second packet according to the second periodicity. An execution periodicity of step S3 and step S4 is a second periodicity. In other words, after receiving the second packet, the first node does not perform step S3 temporarily, and periodically performs step S3 at a moment indicated by the second periodicity; and after receiving the first packet, the second node does not perform step S4 temporarily, and periodically performs step S4 at a moment indicated by the second periodicity.

Optionally, the first node is used as an example. Before step S3 is performed, each time a second packet from the second node is received, the first node stores a second topology identifier and a second synchronization radius identifier that are carried in the second packet, to perform step S3 based on related records locally stored by the first node. For example, the related records locally stored by the first node are shown in Table 2.

**Table 2**

| Packet sequence number | Timestamp | Node identifier | Topology identifier | Synchronization radius |
|---|---|---|---|---|
| 1 | 00:00:25 | Second node | X1 | Y1 |
| 2 | 00:00:35 | Second node | X2 | Y2 |
| 3 | 00:00:38 | Third node (a neighboring node of a first node) | X3 | Y3 |
| 4 | 00:00:45 | Second node | X4 | Y4 |

For example, the first periodicity is 30 seconds, and the second periodicity is 10 minutes. The first node sends the first packet once every 30 seconds (step S1 is performed once every 30 seconds) based on an indication of the first periodicity, and the second node sends the second packet once every 30 seconds (step S2 is performed once every 30 seconds) based on the indication of the first periodicity. In the foregoing process, the first node updates the first packet based on the updated topology information (the first node) and the updated synchronization radius (the first node); and the second node updates the second packet based on the updated topology information (the second node) and the updated synchronization radius (the second node). After receiving the heartbeat packet (for example, the second packet from the second node) from the neighboring node, the first node does not perform step S3 temporarily, but performs step S3 once every 10 minutes based on the indication of the second periodicity. After receiving the heartbeat packet (for example, the first packet from the first node) from the neighboring node, the second node does not perform step S4 temporarily, but performs step S4 once every 10 minutes. Optionally, first periodicities of different nodes may be different, and second periodicities of different nodes may be different. According to the foregoing method, flooding overheads generated when topology information is synchronously updated in a network are reduced.

In this embodiment of this application, the second node is the neighboring node of the first node. The first node sends the first packet in a broadcast manner. The first node receives the second packet from the second node, where the second packet is the broadcast packet. The first packet and the second packet each carry the identity identifier, the topology identifier, and the synchronization radius identifier that are of the respective node. The first node determines, only based on the first packet and the second packet, whether the first node and the second node need to synchronize the topology information. Whether the neighboring nodes need to synchronize the topology information is determined based on the broadcast packets, to maintain the neighbor relationship based on the broadcast packets, so as to avoid the link establishment procedure, reduce the power consumption of the nodes, and reduce power consumption of a link. This ensures routing correctness of a service while reducing routing flooding overheads.

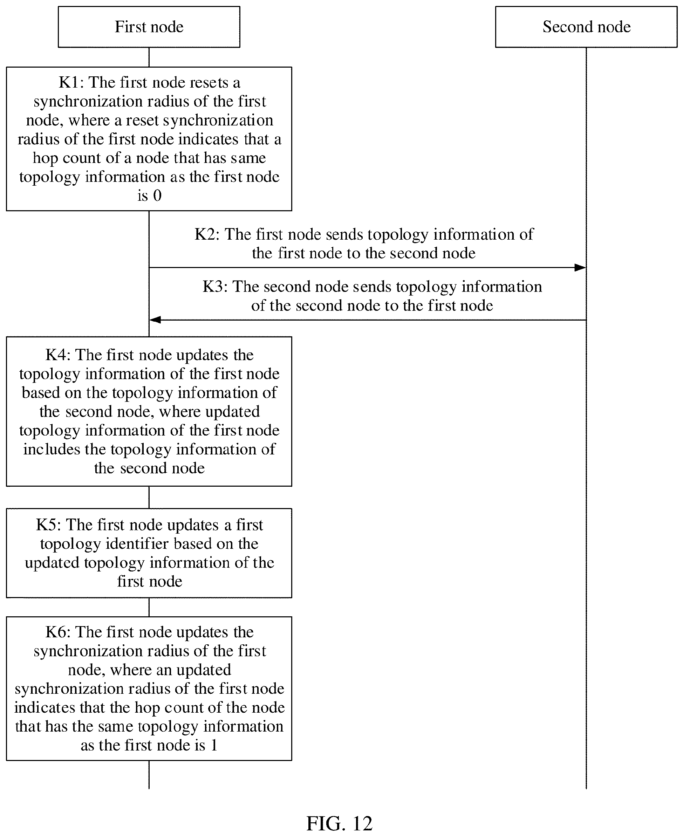

With reference to the foregoing embodiments, an example in which a first node includes only one neighboring node (a second node) is used to describe how to synchronize topology information between the first node and the second node. FIG. 12 is a schematic flowchart of synchronizing topology information according to an embodiment of this application. In this embodiment of this application, a method for synchronizing topology information between a first node and a second node includes the following steps.

In a possible implementation, when the first node determines that a first topology identifier carried in a first packet is inconsistent with a second topology identifier carried in a second packet, step K1 to step K6 are triggered.

In another possible implementation, the first node triggers, based on an indication of a second periodicity, a topology information update procedure with the second node, that is, step K1 to step K6 are triggered.

In another possible implementation, the first node triggers, based on a change event of topology information, a topology information update procedure with the second node, that is, step K1 to step K6 are triggered. The change event of the topology information includes but is not limited to: a node goes online or offline, a route of the node changes, or a connection of the node changes.

K1: The first node resets a synchronization radius of the first node, where a reset synchronization radius of the first node indicates that a hop count of a node that has same topology information as the first node is 0.

K2: The first node sends topology information of the first node to the second node.

In step K2, the first node updates local topology information of the first node based on the second packet from the second node. Updated topology information of the first node includes a neighbor entry related to the second node, where the neighbor entry related to the second node is a neighbor entry that is generated by the first node based on the second packet.

Then, the first node sends the updated topology information of the first node to the second node.

K3: The second node sends topology information of the second node to the first node.

In step K3, the second node updates local topology information of the second node based on the first packet from the first node. Updated topology information of the second node includes a neighbor entry related to the first node, where the neighbor entry related to the first node is a neighbor entry that is generated by the second node based on the first packet.

Then, the second node sends the updated topology information of the second node to the first node.

It should be noted that a sequence of performing step K2 and step K3 is not limited in embodiments of this application.

K4: The first node updates the topology information of the first node based on the topology information of the second node, where updated topology information of the first node includes the topology information of the second node.

In step K4, after receiving the topology information from the second node, the first node updates the local (the first node) topology information based on the topology information of the second node. The updated topology information of the first node includes the topology information of the second node, to ensure that the topology information of the first node is consistent with the topology information of the second node.

Similar to step K4, the second node updates the topology information of the first node based on the topology information of the first node. The updated topology information of the second node includes the topology information of the first node, to ensure that the topology information of the first node is consistent with the topology information of the second node.

K5: The first node updates the first topology identifier based on the updated topology information of the first node.

In step K5, the first node generates a new first topology identifier based on the updated topology information of the first node. The first node uses the updated first topology identifier in a first packet sent after step K5. For a method for generating the first topology identifier, refer to the foregoing embodiments. Details are not described herein again.

K6: The first node updates the synchronization radius of the first node, where an updated synchronization radius of the first node indicates that the hop count of the node that has the same topology information as the first node is 1.

In step K6, after the first node completes synchronization of topology information, the first node updates the synchronization radius of the first node based on the synchronization radius of the first node and a synchronization radius of the second node (the synchronization radius of the second node is indicated by a second synchronization radius identifier carried in the second packet). The updated synchronization radius of the first node indicates that the hop count of the node that has the same topology information as the first node is 1.

In this embodiment of this application, the topology information of the first node and the topology information of the second node are synchronously updated by using the foregoing method, to ensure routing correctness of a service while reducing routing flooding overheads.

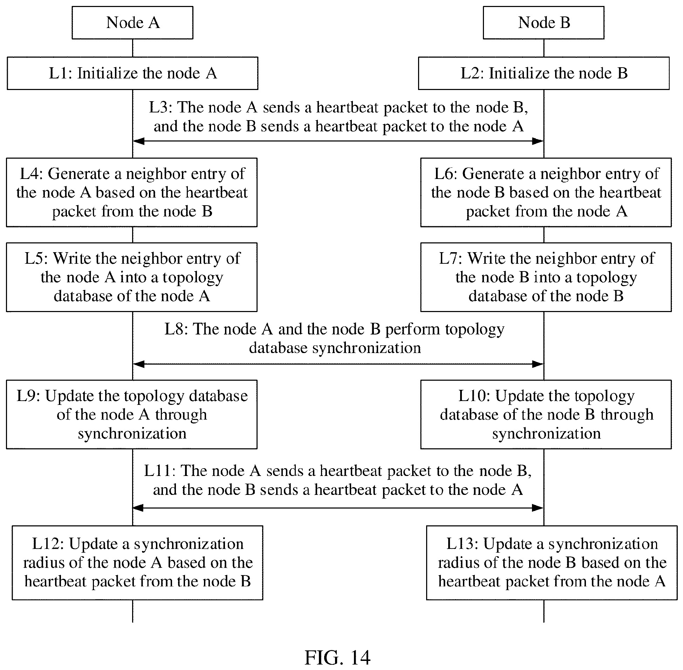

With reference to the foregoing embodiments, the following describes some application scenarios in embodiments of this application. First, a procedure of updating topology information between a node A and a node B is described, where the node A is a neighboring node of the node B. FIG. 14 is a diagram of an application scenario according to an embodiment of this application. The following steps are specifically included.

L1: Initialize the node A. Specifically, topology information of the node A and a synchronization radius of the node A are initialized.

L2: Initialize the node B. Specifically, topology information of the node B and a synchronization radius of the node B are initialized.

L3: The node A sends a heartbeat packet to the node B, and the node B sends a heartbeat packet to the node A.

L4: The node B generates a neighbor entry of the node A based on the heartbeat packet from the node B.

L5: The node A writes the neighbor entry of the node A into a topology database of the node A.

L6: The node B generates a neighbor entry of the node B based on the heartbeat packet from the node A.

L7: The node B writes the neighbor entry of the node B into a topology database of the node B.

L8: The node A and the node B perform topology database synchronization.

L9: The node A updates the topology database of the node A through synchronization.

L10: The node B updates the topology database of the node B through synchronization.

L11: The node A sends a heartbeat packet to the node B, and the node B sends a heartbeat packet to the node A.

L12: The node A updates the synchronization radius of the node A based on the heartbeat packet from the node B.

L13: The node B updates the synchronization radius of the node B based on the heartbeat packet from the node A.

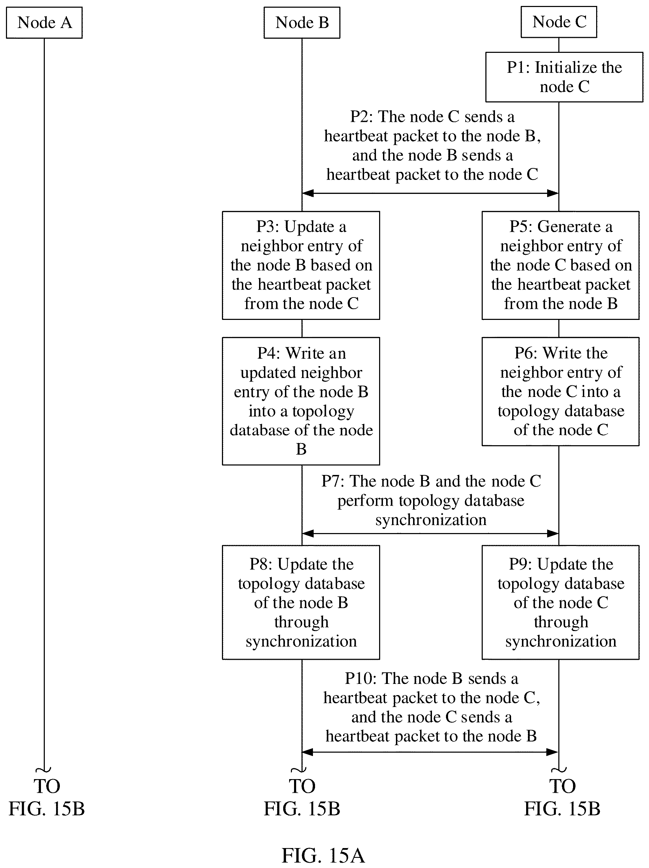

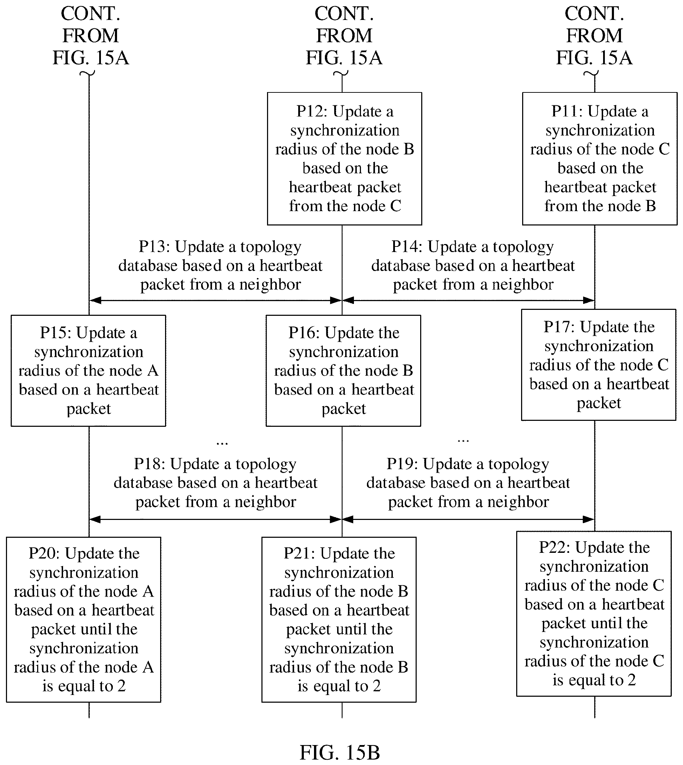

Second, based on the scenario shown in FIG. 14, a procedure of updating topology information between the node A, the node B, and a node C after the node C goes online is described, where the node C is a neighboring node of the node B. FIG. 15A and FIG. 15B are a diagram of another application scenario according to an embodiment of this application. The following steps are specifically included.

P1: Initialize the node C. Specifically, the topology information of the node A and the synchronization radius of the node A are initialized.

P2: The node C sends a heartbeat packet to the node B, and the node B sends a heartbeat packet to the node C.

P3: The node B updates the neighbor entry of the node B based on the heartbeat packet from the node C.

P4: The node B writes an updated neighbor entry of the node B into the topology database of the node B.

P5: The node C generates a neighbor entry of the node C based on the heartbeat packet from the node B.

P6: The node C writes the neighbor entry of the node C into a topology database of the node C.

P7: The node B and the node C perform topology database synchronization.

P8: The node B updates the topology database of the node B through synchronization.

P9: The node C updates the topology database of the node C through synchronization.

P10: The node B sends a heartbeat packet to the node C, and the node C sends a heartbeat packet to the node B.

P11: The node C updates the synchronization radius of the node C based on the heartbeat packet from the node B.

P12: The node B updates the synchronization radius of the node B based on the heartbeat packet from the node C.

P13: Update a topology database based on a heartbeat packet from a neighbor.

P14: Update a topology database based on a heartbeat packet from a neighbor.

P15: The node A updates the synchronization radius of the node A based on a heartbeat packet.

P16: The node B updates the synchronization radius of the node B based on a heartbeat packet.

P17: The node C updates the synchronization radius of the node C based on a heartbeat packet.

P18: Update a topology database based on a heartbeat packet from a neighbor.

P19: Update a topology database based on a heartbeat packet from a neighbor.

Step P13 to step P19 are repeated until step P20 to step P22.

P20: The node A updates the synchronization radius of the node A based on a heartbeat packet until the synchronization radius of the node A is equal to 2.

P21: The node B updates the synchronization radius of the node B based on a heartbeat packet until the synchronization radius of the node B is equal to 2.

P22: Update the synchronization radius of the node C based on a heartbeat packet until the synchronization radius of the node C is equal to 2.

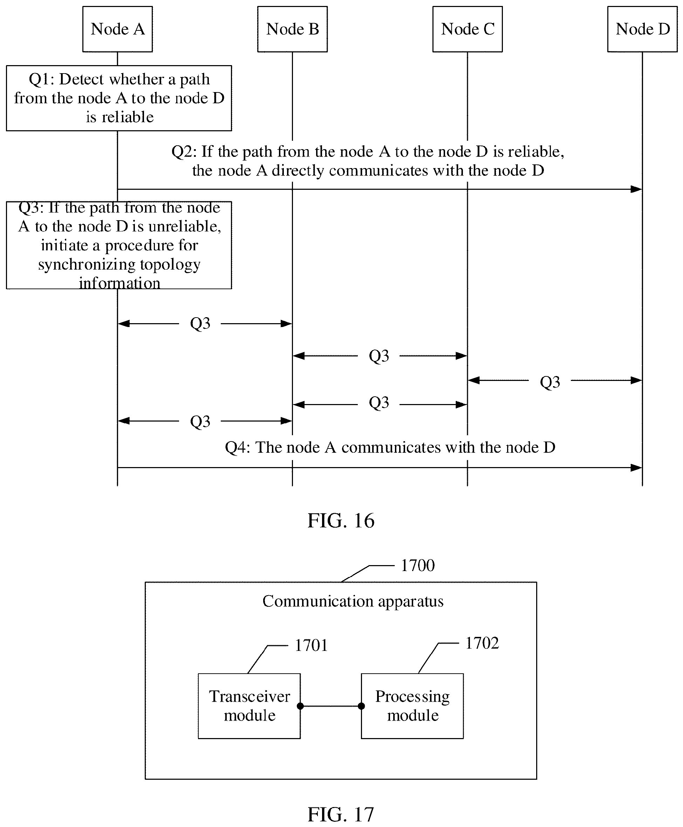

Again, a scenario in which a network includes a node A, a node B, a node C, and a node D is introduced, where a neighboring node of the node A is the node B, neighboring nodes of the node B are the node C and the node A, neighboring nodes of the node C are the node B and the node D, and a neighboring node of the node D is the node C. FIG. 16 is a diagram of still another application scenario according to an embodiment of this application. The following steps are specifically included.

Q1: Detect whether a path from the node A to the node D is reliable.

Q2: If the path from the node A to the node D is reliable, the node A directly communicates with the node D.

Q3: If the path from the node A to the node D is unreliable, initiate a procedure for synchronizing topology information. The procedure for synchronizing topology information is performed from the node A to the node D in sequence. A specific synchronization procedure is similar to the foregoing step P13 to step P19. Details are not described herein again. After the node A to the node D all complete synchronization of topology information, and topology information of the node A, the node B, the node C, and the node D is the same, step Q4 is performed.

Q4: The node A communicates with the node D.

The following describes communication apparatuses in embodiments of this application. The communication apparatuses described below have any function of the first node or the second node in the foregoing method embodiments.

FIG. 17 is a diagram of a structure of a communication apparatus 1700 according to an embodiment of this application. As shown in FIG. 17, the communication apparatus 1700 includes a transceiver module 1701 and a processing module 1702.

The communication apparatus 1700 may correspond to the first node or the second node in the foregoing method embodiments. Units in the communication apparatus 1700 and the foregoing other operations and/or functions are used to implement various steps and methods implemented by the first node or the second node in the foregoing method embodiments respectively. For specific details, refer to the foregoing method embodiments. For brevity, details are not described herein again.

When the communication apparatus 1700 performs the foregoing method embodiments, division of the foregoing functional modules is merely used as an example for description. During actual application, the foregoing functions may be allocated to different functional modules for implementation based on a requirement, that is, an internal structure of the communication apparatus 1700 is divided into different functional modules, to complete all or some of the functions described above. In addition, the communication apparatus 1700 provided in the foregoing embodiment pertains to a same concept as the methods in the embodiments corresponding to FIG. 5 to FIG. 16. For a specific implementation process of the communication apparatus 1700, refer to the foregoing method embodiments. Details are not described herein again.

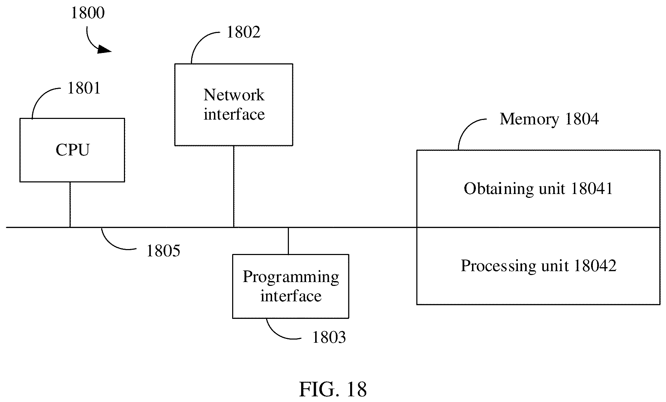

To implement the foregoing embodiments, this application further provides a communication apparatus. FIG. 18 is a diagram of a structure of a communication apparatus 1800 according to an embodiment of this application.

Although the communication apparatus 1800 shown in FIG. 18 shows some specific features, a person skilled in the art is aware from embodiments of this application that, for brevity, FIG. 18 does not show various other features, so as not to confuse more related aspects of the implementations disclosed in embodiments of this application. In view of this, for example, in some implementations, the communication apparatus 1800 includes one or more processing units (for example, CPUs) 1801, a network interface 1802, a programming interface 1803, a memory 1804, and one or more communication buses 1805 configured to interconnect various components. In some other implementations, for the communication apparatus 1800, some functional components or units may alternatively be omitted or added based on the foregoing examples.

In some implementations, the network interface 1802 is configured to connect to one or more other communication apparatuses/servers in a network system. In some implementations, the communication bus 1805 includes a circuit for interconnecting and controlling communication between system components. The memory 1804 may include a non-volatile memory, for example, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. Alternatively, the memory 1804 may include a volatile memory. The volatile memory may be a random access memory (random access memory, RAM), and is used as an external cache.

In some implementations, the memory 1804 or a non-transitory computer-readable storage medium of the memory 1804 stores the following programs, modules, and data structures, or subsets thereof, for example, includes a transceiver unit (not shown in the figure), an obtaining unit 18041, and a processing unit 18042.

In a possible embodiment, the communication apparatus 1800 may have any function of the first node or the second node in the method embodiments corresponding to FIG. 5 to FIG. 16.

It should be understood that the communication apparatus 1800 corresponds to the first node or the second node in the foregoing method embodiments. Modules in the communication apparatus 1800 and the foregoing other operations and/or functions are used to implement various steps and methods implemented by the first node or the second node in the foregoing method embodiments respectively. For specific details, refer to the foregoing method embodiments corresponding to FIG. 5 to FIG. 16. For brevity, details are not described herein again.

It should be understood that, in this application, the network interface 1802 on the communication apparatus 1800 may complete data receiving and sending operations, or a processor may invoke program code in the memory and cooperate with the network interface 1802 as required, to implement a function of a transceiver unit.

In various implementations, the communication apparatus 1800 is configured to perform the topology information update method provided in embodiments of this application, for example, perform the topology information update method corresponding to the embodiments shown in FIG. 5 to FIG. 16.

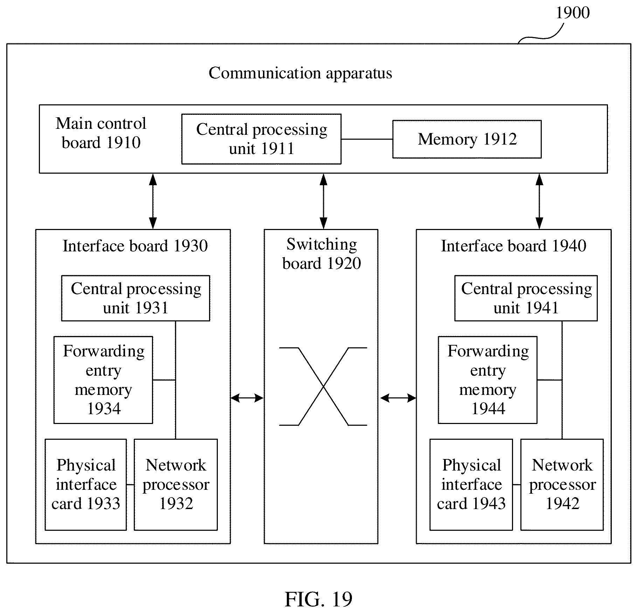

A specific structure of the communication apparatus in FIG. 18 in this application may be shown in FIG. 19.

FIG. 19 is a diagram of a structure of a communication apparatus 1900 according to an embodiment of this application. The communication apparatus 1900 includes a main control board 1911/main control board 1910 and an interface board 1930.

The main control board 1911/main control board 1910 is also referred to as a main processing unit (main processing unit, MPU) or a route processor (route processor). The main control board 1911/main control board 1910 controls and manages components in the communication apparatus 1900, including functions of route calculation, device management, device maintenance, and protocol processing. The main control board 1911/main control board 1910 includes a central processing unit 1911 and a memory 1912.

The interface board 1930 is also referred to as a line processing unit (line processing unit, LPU), a line card (line card), or a service board. The interface board 1930 is configured to provide various service interfaces and implement data packet forwarding. The service interfaces include but are not limited to an Ethernet interface and a POS (Packet over SONET/SDH) interface. The interface board 1930 includes a central processing unit 1931, a network processor 1932, a forwarding entry memory 1934, and a physical interface card (physical interface card, PIC) 1933.

The central processing unit 1931 on the interface board 1930 is configured to control and manage the interface board 1930, and communicate with the central processing unit 1911 on the main control board 1911/main control board 1910.

The network processor 1932 is configured to implement packet forwarding. A form of the network processor 1932 may be a forwarding chip.

The physical interface card 1933 is configured to implement an interconnection function at a physical layer. Original traffic enters the interface board 1930 from the physical interface card, and a processed packet is sent from the physical interface card 1933. The physical interface card 1933 includes at least one physical interface. The physical interface is also referred to as a physical port, and the physical interface may be a flexible Ethernet (Flexible Ethernet, FlexE) physical interface. The physical interface card 1933, also referred to as a subcard, may be installed on the interface board 1930, and is responsible for converting an optical/electrical signal into a packet, performing validity check on the packet, and forwarding the packet to the network processor 1932 for processing. In some embodiments, the central processing unit 1931 of the interface board 1930 may also implement a function of the network processor 1932, for example, implement software forwarding based on a general-purpose CPU. In this case, the network processor 1932 is not required in the interface board 1930.

Optionally, the communication apparatus 1900 includes a plurality of interface boards. For example, the communication apparatus 1900 further includes an interface board 1940. The interface board 1940 includes a central processing unit 1941, a network processor 1942, a forwarding entry memory 1944, and a physical interface card 1943.

Optionally, the communication apparatus 1900 further includes a switching board 1920. The switching board 1920 may also be referred to as a switch fabric unit (switch fabric unit, SFU). When the communication apparatus has a plurality of interface boards 1930, the switching board 1920 is configured to complete data exchange between the interface boards. For example, the interface board 1930 and the interface board 1940 may communicate with each other via the switching board 1920.

The main control board 1911/main control board 1910 is coupled with the interface boards. For example, the main control board 1911/main control board 1910, the interface board 1930, the interface board 1940, and the switching board 1920 are connected through a system bus and/or a system backplane to implement interworking. In a possible implementation, an inter-process communication (inter-process communication, IPC) channel is established between the main control board 1911/main control board 1910 and the interface board 1930, and the main control board 1911/main control board 1910 and the interface board 1930 communicate with each other through the IPC channel.

Logically, the communication apparatus 1900 includes a control plane and a forwarding plane. The control plane includes the main control board 1911/main control board 1910 and the central processing unit 1931. The forwarding plane includes components that perform forwarding, for example, the forwarding entry memory 1934, the physical interface card 1933, and the network processor 1932. The control plane implements functions such as advertising a route, generating a forwarding table, processing signaling and protocol packets, and configuring and maintaining a status of a device. The control plane delivers the generated forwarding table to the forwarding plane. On the forwarding plane, the network processor 1932 performs table lookup and forwarding on a packet received through the physical interface card 1933 based on the forwarding table delivered by the control plane. The forwarding table delivered by the control plane may be stored in the forwarding entry memory 1934. In some embodiments, the control plane and the forwarding plane may be completely separated, and are not on a same device.

It should be understood that the transceiver module in the communication apparatus 1700 may be equivalent to the physical interface card 1933 or the physical interface card 1943 in the communication apparatus 1900. The obtaining unit 18041 and the processing unit 18042 in the communication apparatus 1800 may be equivalent to the central processing unit 1911 or the central processing unit 1931 in the communication apparatus 1900, or may be equivalent to program code or instructions stored in the memory 1912.

It should be understood that, in this embodiment of this application, an operation on the interface board 1940 is consistent with an operation on the interface board 1930. For brevity, details are not described again. It should be understood that the communication apparatus 1900 in this embodiment may correspond to the first node or the second node in the foregoing method embodiments, the main control board 1911/main control board 1910, the interface board 1930, and/or the interface board 1940 in the communication apparatus 1900 may implement functions of and/or steps implemented by the first node or the second node in the foregoing method embodiments. For brevity, details are not described herein again.

It should be noted that there may be one or more main control boards. When there are a plurality of main control boards, the main control boards may include an active main control board and a standby main control board. There may be one or more interface boards. A stronger data processing capability of the communication apparatus indicates a larger quantity of provided interface boards. There may also be one or more physical interface cards on the interface board. There may be no switching board or one or more switching boards. When there are a plurality of switching boards, load balancing and redundancy backup may be implemented together. In a centralized forwarding architecture, the communication apparatus may not need a switching board, and the interface board provides a function of processing service data of an entire system. In a distributed forwarding architecture, the communication apparatus may include at least one switching board, and exchange data between a plurality of interface boards through the switching board, to provide a large-capacity data exchange and processing capability. Optionally, a form of the communication apparatus may alternatively be only one card, to be specific, there is no switching board, and functions of the interface board and the main control board are integrated on the card. In this case, the central processing unit on the interface board and the central processing unit on the main control board may be combined into one central processing unit on the card, to implement functions obtained by superimposing the interface board and the main control board. A specific architecture that is to be used depends on a specific networking deployment scenario. This is not uniquely limited herein.

In some possible embodiments, the first node and/or the second node may be implemented as virtualization devices/ a virtualization device. The virtualization device may be a virtual machine (virtual machine, VM), a virtual router, or a virtual switch on which a program having a packet sending function is run. The virtualization device is deployed on a hardware device (for example, a physical server). For example, the first node or the second node may be implemented based on a general-purpose physical server in combination with a network functions virtualization (network functions virtualization, NFV) technology.

An embodiment of this application further provides a computer-readable storage medium, including instructions. When the instructions are run on a computer, the computer is enabled to control a terminal apparatus to perform any one of the implementations shown in the foregoing method embodiments.

An embodiment of this application further provides a computer program product. The computer program product includes computer program code. When the computer program code is run on a computer, the computer is enabled to perform any one of the implementations shown in the foregoing method embodiments.

Further, an embodiment of this application further provides a computer program product. When the computer program product runs on a computer, the computer is enabled to perform the methods in the method embodiments corresponding to FIG. 5 to FIG. 16.

An embodiment of this application further provides a chip system, including a processor and an interface circuit. The interface circuit is configured to receive instructions and transmit the instructions to the processor. The processor is configured to implement the method in any one of the foregoing method embodiments.

Optionally, the chip system further includes a memory, and there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor. The method in any one of the foregoing method embodiments is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

The foregoing describes embodiments of this application in detail. Steps in the methods in embodiments of this application may be sequentially scheduled, combined, or deleted based on an actual requirement. Modules in the apparatuses in embodiments of this application may be divided, combined, or deleted based on an actual requirement.

It should be understood that "one embodiment" or "an embodiment" mentioned in the entire specification means that particular features, structures, or characteristics related to the embodiment are included in at least one embodiment of this application. Therefore, "in one embodiment" or "in an embodiment" appearing throughout the specification does not necessarily refer to a same embodiment. In addition, these particular features, structures, or characteristics may be combined in one or more embodiments in any appropriate manner. It should be understood that sequence numbers of the foregoing processes do not mean execution sequences in various embodiments of this application. The execution sequences of the processes should be determined according to functions and internal logical of the processes, and should not be construed as any limitation on the implementation processes of embodiments of this application.

The term "and/or" in this specification describes only an association relationship for describing associated objects and indicates that three relationships may exist. For example, A and/or B may indicate the following three cases: Only A exists, both A and B exist, and only B exists. In addition, the character "/" in this specification generally indicates an "or" relationship between associated objects.

It should be understood that, in embodiments of this application, "B corresponding to A" indicates that B is associated with A, and B may be determined based on A. However, it should be further understood that determining B based on A does not mean that B is determined based only on A. B may alternatively be determined based on A and/or other information.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions in embodiments.

In addition, all functional units in embodiments of this application may be integrated into one processing unit, or each of the units may exist alone physically, or two or more units are integrated into one unit. The integrated unit may be implemented in a form of hardware, or may be implemented in a form of a software function unit.

## Claims

1. A topology information update method, comprising:
sending a first packet, wherein the first packet is a broadcast packet, the first packet comprises a first identity identifier, a first topology identifier, and a first synchronization radius identifier, the first identity identifier identifies a first node, the first topology identifier indicates a topology relationship of the first node in a network, and the first synchronization radius identifier indicates a hop count of a node that has same topology information as the first node;
receiving a second packet, wherein the second packet is a broadcast packet, the second packet comprises a second identity identifier, a second topology identifier, and a second synchronization radius identifier, the second identity identifier identifies a second node, the second topology identifier indicates a topology relationship of the second node in the network, the second synchronization radius identifier indicates a hop count of a node that has same topology information as the second node, and the second node is a neighboring node of the first node; and
determining, based on the first packet and the second packet, whether the first node and the second node need to synchronize topology information, wherein the topology information indicates a topology relationship of the nodes in the network.

2. The method according to claim 1, wherein the determining, based on the first packet and the second packet, whether the first node and the second node need to synchronize topology information comprises:
detecting whether the first topology identifier is consistent with the second topology identifier; and
in response to inconsistence between the first topology identifier and the second topology identifier, determining that the first node and the second node synchronize topology information; or
in response to consistence between the first topology identifier and the second topology identifier, determining that the first node and the second node do not need to synchronize topology information.

3. The method according to claim 1, wherein the determining, based on the first packet and the second packet, whether the first node and the second node need to synchronize topology information comprises:
determining, based on the first topology identifier, the first synchronization radius identifier, the second topology identifier, and the second synchronization radius identifier, whether a path between the first node and a target node is reliable, wherein the path between the target node and the first node passes the second node; and
in response to unreliability of the path between the first node and the target node, determining that the first node and the second node synchronize the topology information; or
in response to reliability of the path between the first node and the target node, determining that the first node and the second node do not need to synchronize the topology information.

4. The method according to claim 3, wherein the determining, based on the first topology identifier, the first synchronization radius identifier, the second topology identifier, and the second synchronization radius identifier, whether to update the topology information of the first node comprises:
obtaining a path hop count, wherein the path hop count is a hop count of a node that a shortest path between the first node and the target node passes; and
when the first topology identifier is consistent with the second topology identifier, and a synchronization radius of the second node is greater than or equal to the path hop count minus 2, determining that the path between the first node and the target node is reliable, wherein the second synchronization radius identifier is obtained based on the synchronization radius of the second node;
when the first topology identifier is consistent with the second topology identifier, and a synchronization radius of the second node is less than the path hop count minus 2, determining that the path between the first node and the target node is unreliable; or
when the first topology identifier is inconsistent with the second topology identifier, determining that the path between the first node and the target node is unreliable.

5. The method according to any one of claims 2 to 4, wherein the first node and the second node synchronize topology information comprises:
sending topology information of the first node to the second node;
receiving topology information of the second node;
updating the topology information of the first node based on the topology information of the second node, wherein updated topology information of the first node comprises the topology information of the second node; and
updating the first topology identifier based on the updated topology information of the first node.

6. The method according to claim 5, wherein before the sending the topology information of the first node to the second node, the method further comprises:
resetting a synchronization radius of the first node, wherein a reset synchronization radius of the first node indicates that the hop count of the node that has the same topology information as the first node is 0; and
after the updating the topology information of the first node based on the topology information of the second node, the method further comprises:
updating the synchronization radius of the first node, wherein an updated synchronization radius of the first node indicates that the hop count of the node that has the same topology information as the first node is 1; and
updating the first synchronization radius identifier based on the updated synchronization radius of the first node.

7. The method according to any one of claims 1 to 6, wherein the method further comprises:
obtaining synchronization radiuses of a plurality of neighboring nodes, wherein topology information of the plurality of neighboring nodes is the same as the topology information of the first node;
updating the synchronization radius of the first node based on the synchronization radiuses of the plurality of neighboring nodes, wherein an updated synchronization radius of the first node is equal to a smallest synchronization radius in the synchronization radiuses of the plurality of neighboring nodes plus 1; and
obtaining the first synchronization radius identifier based on the synchronization radius of the first node.

8. The method according to any one of claims 5 to 7, wherein the updating the topology information of the first node based on the topology information of the second node comprises:
generating, based on the second packet, a neighbor entry related to the second node; and
updating the topology information of the first node based on the neighbor entry related to the second node, wherein updated topology information of the first node comprises the neighbor entry related to the second node.

9. The method according to claim 8, wherein the neighbor entry comprises any one or more of the following:
a source address, a destination address, type information of a path, a timer of the path, and a priority of the path, wherein the path is a path between a node corresponding to the source address and a node corresponding to the destination address, and the timer of the path indicates update time of the path.

10. The method according to any one of claims 1 to 9, wherein sending the first packet comprises:
periodically sending the first packet based on an indication of a first periodicity; or
in response to inconsistence between the topology information of the first node and the topology information of the second node, sending the first packet.

11. The method according to any one of claims 1 to 10, wherein the determining, based on the first packet and the second packet, whether the first node and the second node need to synchronize topology information comprises:
periodically determining, based on an indication of a second periodicity and the first packet and the second packet, whether the first node and the second node need to synchronize the topology information.

12. The method according to any one of claims 1 to 11, wherein the first packet is a layer 2 broadcast packet, and the second packet is a layer 2 broadcast packet.

13. The method according to claim 12, wherein the first packet is a Bluetooth low energy advertisement BLE ADV packet, and the second packet is a Bluetooth low energy advertisement BLE ADV packet.

14. The method according to any one of claims 1 to 13, wherein the method further comprises:
performing hash calculation on the topology information of the first node, to obtain the first topology identifier.

15. The method according to any one of claims 1 to 14, wherein a length of the first identity identifier is 8 bytes, a length of the first topology identifier is 4 bytes, and a length of the first synchronization radius identifier is 1 byte.

16. A topology information update method, comprising:
receiving a first packet, wherein the first packet is a broadcast packet, the first packet comprises a first identity identifier, a first topology identifier, and a first synchronization radius identifier, the first identity identifier identifies a first node, the first topology identifier indicates a topology relationship of the first node in a network, and the first synchronization radius identifier indicates a hop count of a node that has same topology information as the first node;
sending a second packet, wherein the second packet is a broadcast packet, the second packet comprises a second identity identifier, a second topology identifier, and a second synchronization radius identifier, the second identity identifier identifies a second node, the second topology identifier indicates a topology relationship of the second node in the network, the second synchronization radius identifier indicates a hop count of a node that has same topology information as the second node, and the second node is a neighboring node of the first node; and
determining, based on the first packet and the second packet, whether the first node and the second node need to synchronize topology information, wherein the topology information indicates a topology relationship of the nodes in the network.

17. The method according to claim 16, wherein the determining, based on the first packet and the second packet, whether the first node and the second node need to synchronize topology information comprises:
detecting whether the first topology identifier is consistent with the second topology identifier; and
in response to inconsistence between the first topology identifier and the second topology identifier, determining that the first node and the second node synchronize the topology information; or
in response to consistence between the first topology identifier and the second topology identifier, determining that the first node and the second node do not need to synchronize the topology information.

18. The method according to claim 16, wherein the determining, based on the first packet and the second packet, whether the first node and the second node need to synchronize topology information comprises:
determining, based on the first topology identifier, the first synchronization radius identifier, the second topology identifier, and the second synchronization radius identifier, whether a path between the first node and a target node is reliable, wherein the path between the target node and the first node passes the second node; and
in response to unreliability of the path between the first node and the target node, determining that the first node and the second node synchronize the topology information; or
in response to reliability of the path between the first node and the target node, determining that the first node and the second node do not need to synchronize the topology information.

19. The method according to claim 17 or 18, wherein that the first node and the second node synchronize the topology information comprises:
sending topology information of the second node to the first node;
receiving topology information of the first node;
updating the topology information of the second node based on the topology information of the first node, wherein updated topology information of the second node comprises the topology information of the first node; and
updating the second topology identifier based on the updated topology information of the second node.

20. The method according to claim 19, wherein before the sending topology information of the second node to the first node, the method further comprises:
resetting a synchronization radius of the second node, wherein a reset synchronization radius of the second node indicates that the hop count of the node that has the same topology information as the second node is 0; and
after the updating the topology information of the second node based on the topology information of the first node, the method further comprises:
updating the synchronization radius of the second node, wherein an updated synchronization radius of the second node indicates that the hop count of the node that has the same topology information as the second node is 1; and
updating the second synchronization radius identifier based on the updated synchronization radius of the second node.

21. The method according to any one of claims 16 to 20, wherein the method further comprises:
obtaining synchronization radiuses of a plurality of neighboring nodes, wherein topology information of the plurality of neighboring nodes is the same as the topology information of the second node;
updating the synchronization radius of the second node based on the synchronization radiuses of the plurality of neighboring nodes, wherein an updated synchronization radius of the second node is equal to a smallest synchronization radius in the synchronization radiuses of the plurality of neighboring nodes plus 1; and
obtaining the second synchronization radius identifier based on the synchronization radius of the second node.

22. The method according to any one of claims 19 to 21, wherein the updating the topology information of the second node based on the topology information of the first node comprises:
generating, based on the first packet, a neighbor entry related to the first node; and
updating the topology information of the second node based on the neighbor entry related to the first node, wherein updated topology information of the second node comprises the neighbor entry related to the first node.

23. The method according to any one of claims 16 to 22, wherein sending the second packet comprises:
periodically sending the second packet based on an indication of a first periodicity; or
in response to inconsistency between the topology information of the first node and the topology information of the second node, sending the second packet.

24. The method according to any one of claims 16 to 23, wherein the determining, based on the first packet and the second packet, whether the first node and the second node need to synchronize topology information comprises:
periodically determining, based on an indication of a second periodicity and the first packet and the second packet, whether the first node and the second node need to synchronize the topology information.

25. The method according to any one of claims 16 to 24, wherein the method further comprises:
performing hash calculation on the topology information of the second node, to obtain the second topology identifier.

26. A communication apparatus, comprising a communication interface and a processor, wherein
the communication interface is configured to input and/or output signaling or data; and
the processor is configured to execute a computer-executable program, so that the method according to any one of claims 1 to 15 is performed, or the method according to any one of claims 16 to 25 is performed.

27. A communication apparatus, comprising a processor and a memory, wherein
the memory is configured to store a computer program or instructions; and
the processor is configured to execute the computer program or the instructions in the memory, so that the method according to any one of claims 1 to 15 is performed, or the method according to any one of claims 16 to 25 is performed.

28. A computer-readable storage medium, comprising instructions, wherein when the instructions are executed by a processor, the method according to any one of claims 1 to 15 or claims 16 to 25 is implemented.

29. A computer program product, comprising a program, wherein when the program is executed by a processor, the method according to any one of claims 1 to 15 or claims 16 to 25 is implemented.

30. A chip system, wherein the chip system comprises at least one processor, and when program instructions are executed in the at least one processor, the method according to any one of claims 1 to 15 or claims 16 to 25 is implemented.
